(19) Europäisches Patentamt / European Patent Office / Office européen des brevets

(11) **EP 3 416 818 B1**

(12) **EUROPEAN PATENT SPECIFICATION**

(45) Date of publication and mention
of the grant of the patent:
**18.03.2020  Bulletin 2020/12**

(21) Application number: **17708376.3**

(22) Date of filing: **16.02.2017**

(51) Int Cl.:
***B29D 30/54*** *(2006.01)*

(86) International application number:
**PCT/US2017/018241**

(87) International publication number:
**WO 2017/143109 (24.08.2017 Gazette 2017/34)**

(54) **RETREAD BAND AND RETREAD RIM ASSEMBLY COMPRISING SAID BAND**

RUNDERNEUERUNGSBAND UND RUNDERNEUERUNGSFELGENANORDNUNG MIT DEM BAND

BANDE DE RECHAPAGE ET ENSEMBLE DE JANTE DE RECHAPAGE COMPRENANT LADITE BANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.02.2016  US 201662296327 P
31.01.2017  US 201762452984 P**

(43) Date of publication of application:
**26.12.2018  Bulletin 2018/52**

(73) Proprietor: **Firestone Industrial Products
Company, LLC
Nashville, TN 37201 (US)**

(72) Inventors:
 • **WARD, Brandon, J.
Brownsburg
IN 46112 (US)**
 • **SMITH, Jason, B.
Avon
IN 46123 (US)**

(74) Representative: **Kraus & Weisert
Patentanwälte PartGmbB
Thomas-Wimmer-Ring 15
80539 München (DE)**

(56) References cited:
**DE-B- 1 201 044     US-A- 2 960 130
US-A- 3 291 171     US-A- 3 578 045
US-A- 4 781 233     US-A- 5 354 406**

## Description

## BACKGROUND

The subject matter of the present disclosure broadly relates to the art of elastomeric articles and, more particularly, to elastomeric bands dimensioned for use with rim assemblies used in connection tire retreading processes. Retread rim assemblies including such elastomeric bands and methods of assembly are also included.

Tires are well known and commonly used on in a wide variety of applications. As one example, known constructions can include airless or so-called "solid" tires that are commonly used in applications in which particularly heavy loads and/or over terrain that includes debris and/or other ground hazards. As another example, known constructions include pneumatic or so-called "tubeless" tires that are commonly used on vehicles that travel over roadways and other surfaces in a wide variety of conditions. The subject matter of the present disclosure may find particular application and use in conjunction with pneumatic tires, and will be shown and described herein with reference thereto. However, it is to be appreciated that the subject matter of the present disclosure is also amenable to use in other applications and environments, and that the specific uses shown and described herein are merely exemplary. For example, the subject matter of the present disclosure could be used in connection with airless tires. Accordingly, the subject matter of the present disclosure is not intended to be limited to uses associated with the retreading of pneumatic tires, which uses are merely exemplary.

Tires of most types commonly include a tread formed along the outer periphery thereof, such as may assist in improving traction, handling and/or other performance characteristics of the tires during such use. In some cases, the tread area of tires can be sufficiently worn away that traction, handling and/or other performance characteristics may be diminished to an undesirable level. In some situations, however, the remainder of the tire, which is often referred to as a carcass, may still be in good condition and capable of undergoing considerably more use. Recognizing that in many cases it may be economical to refurbish and reuse the worn tires, a retreading industry has developed in which usable carcasses are reconditioned and a new tread is applied.

The retread industry has developed numerous processes and corresponding machines and/or equipment to perform retreading processes. In addition to various inspection and reconditioning steps that are performed, retreading processes include removing the remaining original tread layer from the tire carcass. This step is often referred to as a buffing or grinding operation. Retreading processes also include applying one or more layers of uncured rubber material over the buffed surface of the tire carcass. This uncured rubber material is sometimes referred to as a cushion layer, and can be useful to help adhere the new tread layer to the tire carcass and to generate the desired size of a buffed tire carcass for receiving the new tread layer. Additionally, retreading processes include applying a tread layer around the outer periphery of the tire carcass. In many cases, a length of uncured tread material is applied over the uncured rubber layer with the ends joined to form an endless tire tread around the outer circumference of the tire. Finally, retreading processes include curing the uncured layers of rubber, tread and other materials.

One aspect of retreading processes that has been identified as contributing to the overall quality of retread tires is the concentricity of the tread to the original tire casing. Rim assemblies of a variety of type and kinds have been developed to receive and concentrically support the original tire casing. In some cases, the rim assemblies are formed from two side sections that are positioned along opposing sides of the tire casing. The side sections engage the bead areas of the original tire casing in a manner suitable for forming a substantially fluid-tight seal therewith. In other cases, expandable rim assemblies are formed from numerous rim segments that fit together in a somewhat pie-shaped arrangement. The rim segments fit through the center of the original tire casing in a collapsed condition and can then be expanded to engage the bead areas of the original tire casing in a substantially fluid-tight manner. In these and other constructions, the resulting hub or rim is used to support the original casing during various retreading processes, such as during buffing processes as well as cushion and tread application processes.

As mentioned above, expandable rim assemblies include multiple rim segments that are positioned adjacent one another in a generally circular arrangement. In some cases, an elastomeric band extends peripherally around the rim segments and urges the rim segments in a radially inward direction. Such elastomeric bands are capable of stretching as the rim segments are displaced radially into an expanded condition. Typically, conventional elastomeric bands used in such applications have a generally flat cross-sectional shape to aid in the ingress and egress of the rim assemblies into and out of the tire casing. Additionally, conventional elastomeric bands are formed from unreinforced elastomeric material. As a result of repeated expansion and recovery during use, conventional elastomeric bands undergo an inelastic stretching that results in the elastomeric band becoming loose along the rim segments. Under such conditions, adjacent rim segments can become disarranged relative to one another, which can render the expandable rim assembly difficult to work with thereby reducing the efficiency of retreading processes. In some cases, the elastomeric bands can become so loose and the rim segments sufficiently disarranged that the rim assembly may be deemed unusable without replacement of the elastomeric band. It is well understood that the removal of such rim assemblies from the production environment for repair can contribute to increase costs associated with the production of retread tires.

In some cases, a secondary elastomeric band can be installed over top of the original elastomeric band. Often, the secondary elastomeric band can provide sufficient additional radial bias to original elastomeric band to maintain the rim segments in position for an additional duration prior to requiring replacement of the primary elastomeric band. However, conventional secondary elastomeric bands have a cross-sectional shape or profile that can reduce the ease with which tire casings can be engaged and disengaged with rim assemblies.

In view of the foregoing and notwithstanding the overall success of conventional elastomeric bands for retread rim assemblies, it is believed that the foregoing and/or other disadvantages of conventional constructions exist and that a need remains to meet the aforementioned competing goals while still retaining comparable or improved performance and other desired features. Accordingly, it is believed desirable to develop constructions and method of manufacture that overcome the foregoing and/or other problems and/or disadvantages of known designs, and/or otherwise advance the art of elastomeric articles.

Patent document US 3,578,045 A discloses a tire band, having the features of the preamble of claim 1.

BRIEF SUMMARY

The retread band of the present invention is defined by the features of independent claim 1.

BRIEF DESCRIPTION OF THE DRAWINGS

FIG. 1 is a schematic representation of one example of a tire retreading machine shown in use with a retread rim assembly in accordance with the subject matter of the present disclosure.

FIG. 2 is a side view of one example of a retread rim assembly in accordance with the subject matter of the present disclosure shown in use with an associated tire in condition for retreading.

FIG. 3 a greatly enlarged view of the portion of the retread rim assembly and associated tire identified as Detail 3 in FIG. 2.

FIG. 4 is a side view of the retread rim assembly in FIGS. 1-3 shown in an unexpanded condition prior to engagement with an associated tire.

FIG. 5 is a cross-sectional side view of the retread rim assembly and associated tire in FIGS. 1-3 taken from along line 5-5 in FIG. 2.

FIG. 6 an enlarged view of the portion of the retread rim assembly and associated tire in FIGS. 1-5 identified as Detail 6 in FIG. 5.

FIG. 7 is a top perspective view of one example of a retread band in accordance with the subject matter of the present disclosure.

FIG. 8 is a side view of the exemplary retread band in FIG. 7.

FIG. 9 is a cross-sectional side view of the exemplary retread band in FIGS. 7 and 8 taken from along line 9-9 in FIG. 8.

FIG. 10 is a greatly enlarged view of the portion of the exemplary retread band in FIGS. 7-9 identified as Detail 10 in FIG. 9.

FIG. 11 is a top perspective view of another example of a retread band in accordance with the subject matter of the present disclosure.

FIG. 12 is a side view of the exemplary retread band in FIG. 11.

FIG. 13 is a cross-sectional side view of the exemplary retread band in FIGS. 11 and 12 taken from along line 13-13 in FIG. 12.

FIG. 14 is a greatly enlarged view of the portion of the exemplary retread band in FIGS. 11-13 identified as Detail 14 in FIG. 13.

FIG. 15 is a greatly enlarged view, similar to the view of FIG. 14, of an alternate construction the exemplary retread band shown in FIGS. 11-14.

FIG. 16 is a cross-sectional side view of a second example of a retread rim assembly and associated tire in accordance with the subject matter of the present disclosure taken from along a line similar to line 5-5 in FIG. 2.

FIG. 17 an enlarged view of the portion of the retread rim assembly and associated tire identified as Detail 17 in FIG. 16.

FIG. 18 is a cross-sectional side view of a third example of a retread rim assembly and associated tire in accordance with the subject matter of the present disclosure taken from along a line similar to line 5-5 in FIG. 2.

FIG. 19 an enlarged view of the portion of the retread rim assembly and associated tire identified as Detail 19 in FIG. 18.

FIG. 20 an enlarged view of a portion of the retread rim assembly and associated tire identified shown in FIG. 19 showing an alternate construction of a retread band in accordance with the subject matter of the present disclosure.

FIG. 21 is a cross-sectional side view of a fourth example of a retread rim assembly and associated tire in accordance with the subject matter of the present disclosure take from along a line similar to line 5-5 in FIG. 2.

FIG. 22 an enlarged view of the portion of the retread rim assembly and associated tire identified as Detail 22 in FIG. 21.

DETAILED DESCRIPTION

Turning now to the drawings, it is to be understood that the showings are for purposes of illustrating examples of the subject matter of the present disclosure and are not intended to be limiting. Additionally, it will be appreciated that the drawings are not to scale and that portions of certain features and/or elements may be exaggerated for purposes of clarity and/or ease of understanding.

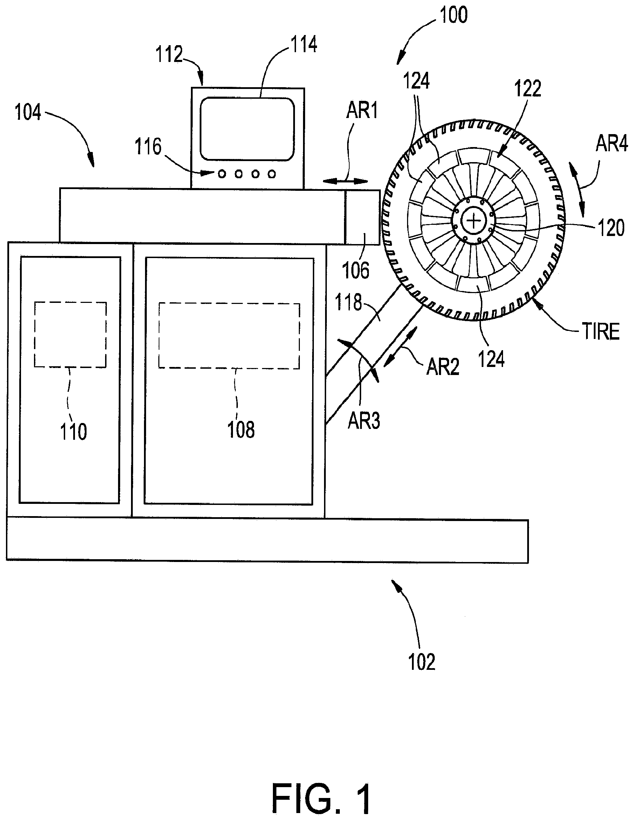

FIG. 1 broadly represents an apparatus or device used in connection with a tire retreading one or more steps of a tire retreading process, and is broadly identified herein as a tire retreading machine **100**. It will be appreciated that tire retreading machine **100** in FIG. 1 can be representative of any one or more pieces of conventional equipment used in connection with any one or more known processes or steps of known tire retreading processes, and that the features shown and described herein with regard tire retreading machine **100** are merely exemplary and not intended to be limiting.

Tire retreading machine **100** is shown as including a base **102** that can be supported on a floor or other surface of a suitable facility. A retread processing unit **104** is shown as being supported on base **102** and can include a retread processing head **106** operatively associated therewith. It will be appreciated that retread processing unit **104** and retread processing head **106** can be representative of any system, component and/or device associated with known tire retreading processes. For example and without being limiting, retread processing unit **104** and retread processing head **106** could be representative of an actuator or drive unit and a corresponding buffing head, a rubber extrusion unit and a corresponding rubber application head, and/or a tread forming unit and a corresponding tread application head. As is represented by arrow **AR1** in FIG. 1, retread processing head **106** can, in some cases, be displaceable relative to retread processing unit **104**, such as may be beneficial for positioning the retread processing head relative to tires of different shapes or sizes, for example.

It will be appreciated that retread processing unit **104**, retread processing head **106** as well as a wide variety of other features, components and devices commonly associated with known tire retreading machines can be energized, operated and/or otherwise controlled in any suitable manner and by way of any one or more power sources. For example, one of more features, components and/or devices of the tire retreading machine could be pneumatically and/or electrically operated and/or controlled. As shown in FIG. 1, tire retreading machine **100** can, optionally, include a pressurized gas system **108** that can be operatively associated with one or more features, components, systems and/or devices of the tire retreading machine, such as one or more of retread processing unit **104** and/or retread processing head **106**, for example. If provided, pressurized gas system **108** can be operative to generate, supply, exhaust and/or otherwise transfer pressurized gas to and/or from such one or more features, components, systems and/or devices of the tire retreading machine.

Additionally, or in the alternative, tire retreading machine **100** can, optionally, include an electrical control system **110** that can be operatively associated with one or more features, components, systems and/or devices of the tire retreading machine, such as one or more of retread processing unit **104** and/or retread processing head **106**, for example. Again, if provided, electrical control system **110** can be operative to generate, receive and/or otherwise communicate electrical signals and/or information to and/or from such one or more features, components, systems and/or devices of the tire retreading machine.

In some cases, tire retreading machine **100** can, optionally, include an operator interface **112**. If included, such an operator interface may be suitable for actuating and/or energizing features, components, systems and/or devices of the tire retreading machine; initiating or discontinuing one or more actions, steps and/or processes; and/or communicating information, data and/or signals of any suitable type or kind to an operator and/or receiving input information, communications, data and/or signals of any suitable type or kind from an operator. One example of a suitable operator interface **112** is shown in FIG. 1 as including a display **114**. In some cases, display **114** can take the form of a touch-screen display permitting an operator to receive information and input commands and/or other information. Additionally, or in the alternative, operator interface **112** can include a plurality of operator input devices **116** (e.g., buttons and/or switches). It will be appreciated, however, that any other suitable combination of devices, components and/or arrangements can alternately be used.

Conventional tire retreading machines typically include one or more structural components operative to support at least an associated tire that is used, worn or otherwise in condition for retreading. In the arrangement shown in FIG. 1, for example, a support arm **118** extends from along base **102** toward an actuation and support hub **120** that is disposed adjacent retread processing head **106**. In some cases, the support arm or other structure can be disposed in a generally fixed position relative to at least the base of the tire retreading machine. In which cases, retread processing head **106** being displaceable, such as has been described above in connection with arrow **AR1**, for example, may be desirable. In other cases, support arm **118** can extend and retract and/or otherwise articulate, such as are respectively represented in FIG. 1 by extension/retraction arrow **AR2** and pivot arrow **AR3**, for example.

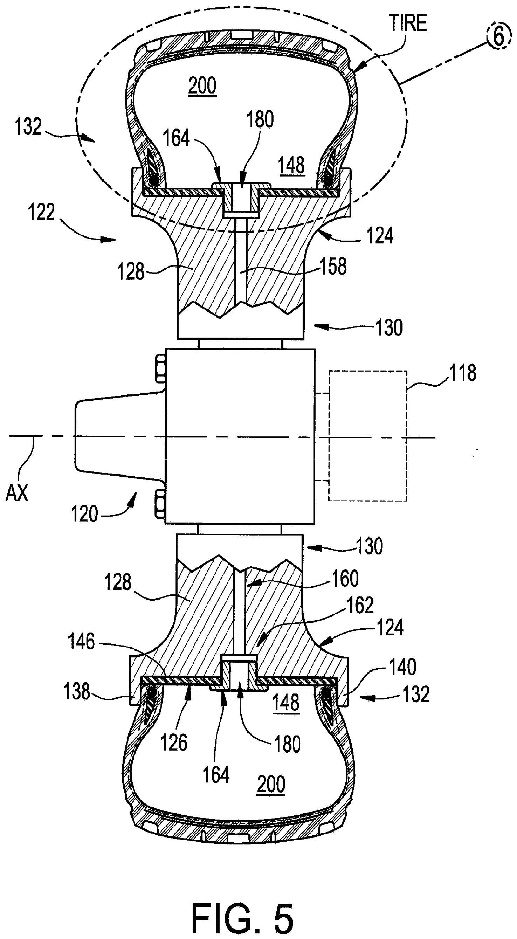

A retread rim assembly **122** is shown in FIGS. 1 and 5 as being supported on support arm **118** such that an associated tire **TIRE** is disposed adjacent retread processing head **106**. It will be appreciated that associated tire **TIRE** is representative of tires of any suitable type, kind and/or construction that are used, worn or otherwise in condition for retreading or other reconditioning. Retread rim assembly **122** is of a type, kind and construction that is suitable for operative engagement with actuation and support hub **120**. The operative connection between hub **120** and retread rim assembly **122** will permit associated tire **TIRE** to be securely supported on the retread rim assembly and introduced to the retread processing head in a suitable manner for performance of one or more retread steps or processes. In a preferred arrangement, hub **120** and retread rim assembly **122** can be operative to rotate associated tire **TIRE** relative to retread processing head **106**, such as by rotating one or more of hub **120** and retread rim assembly **122** relative to support arm **118**, for example, such as is represented in FIG. 1 by arrow **AR4.**

It will be appreciated that a retread rim assembly in accordance with the subject matter of the present disclosure can be of any type, kind and/or construction operative to engage and secure the associated tire in a manner suitable for rotatably driving the associated tire during an action or processing step performed by retread processing head **106**. In such case, the engagement between the retread rim assembly and the associated tire is preferably sufficient to withstand the forces and/or loads applied to the tire during such actions and/or processing steps. Additionally, in a preferred arrangement, a retread rim assembly in accordance with the subject matter of the present disclosure will be capable of forming a substantially fluid-tight seal with the associated tire. Such an arrangement may be beneficial during the retreading of tires of certain types, kinds and/or constructions, such as pneumatic tires, for example. In particular, it is believed that improved quality and/or performance characteristics of retreaded pneumatic tires can be achieved when one or more of the retreading steps and/or processes are completed with the associated pneumatic tire in an at least partially inflated condition. Non-limiting examples of such characteristics can include improved sizing and/or concentricity of the resulting retread tire.

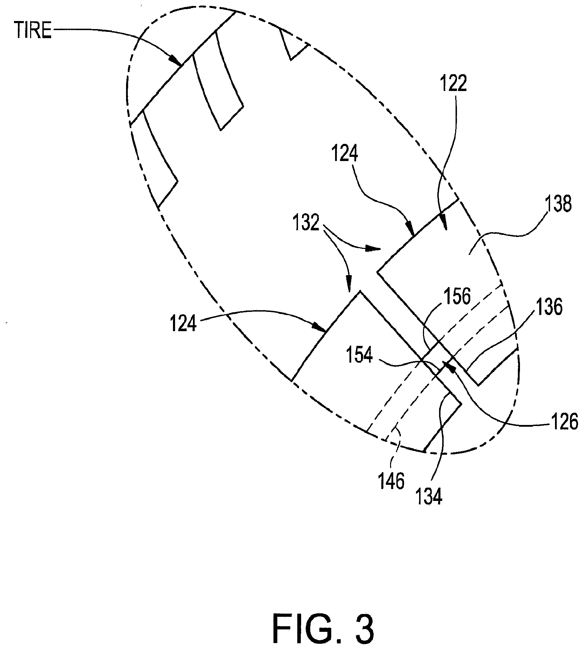

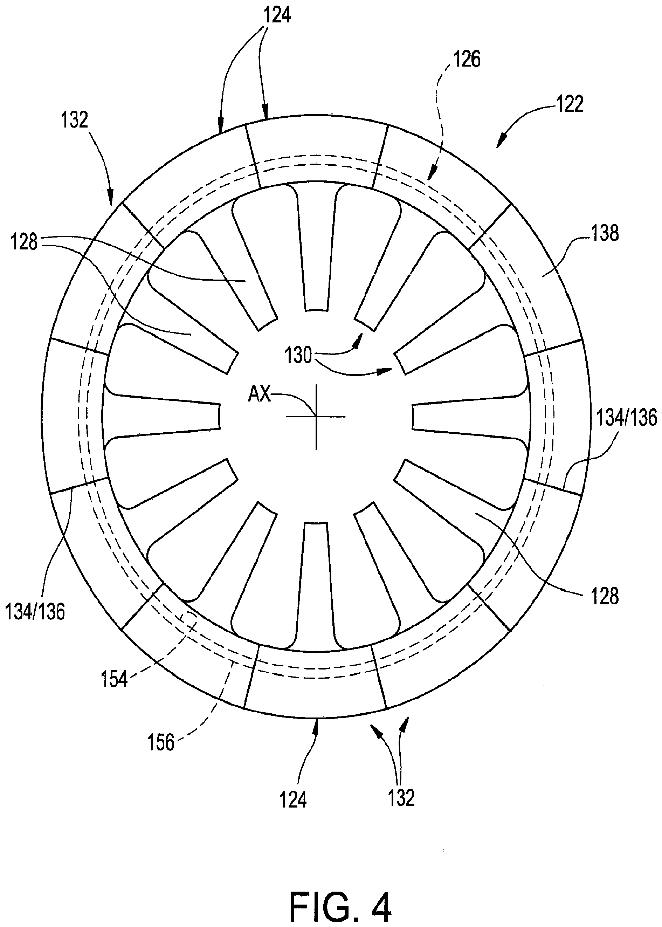

Retread rim assembly **122** represents one example of a retread rim assembly in accordance with the subject matter of the present disclosure. Retread rim assembly **122** is shown in FIGS. 1-6 as having a longitudinal axis **AX** about which retread rim assembly **122** can rotate in a mounted or otherwise installed condition, such as on or along tire retreading machine **100**, for example. Retread rim assembly **122** includes a plurality of rim segments **124** as well as a retread band **126** in accordance with the subject matter of the present disclosure that is operatively engaged with the plurality of rim segments. As shown in FIGS. 1-6, rim segments **124** can be arranged peripherally about longitudinal axis **AX.** Retread band **126** can extend around rim segments **124** such that the retread band is circumferentially tensioned to bias the plurality of rim segments radially inward such that adjacent rim segments are disposed in abutting engagement with one another in a free, natural or otherwise unexpanded condition of retread rim assembly **122**, such as is shown in FIG. 4, for example.

It will be recognized and appreciated that rim segments **124** can be of any suitable size, shape, configuration and/or construction. For example, rim segments **124** can include a segment body **128** that is formed from a suitably strong and rigid material or combination of materials, such as a metal material (e.g., aluminum and/or steel), a polymeric material (e.g., a high-strength reinforced or unreinforced thermoplastic) or any combination thereof. Segment bodies **128** can extend between an inner end **130** and an outer periphery **132**, which - in an assembled condition of the rim segments - is disposed radially outward of inner end **130**.

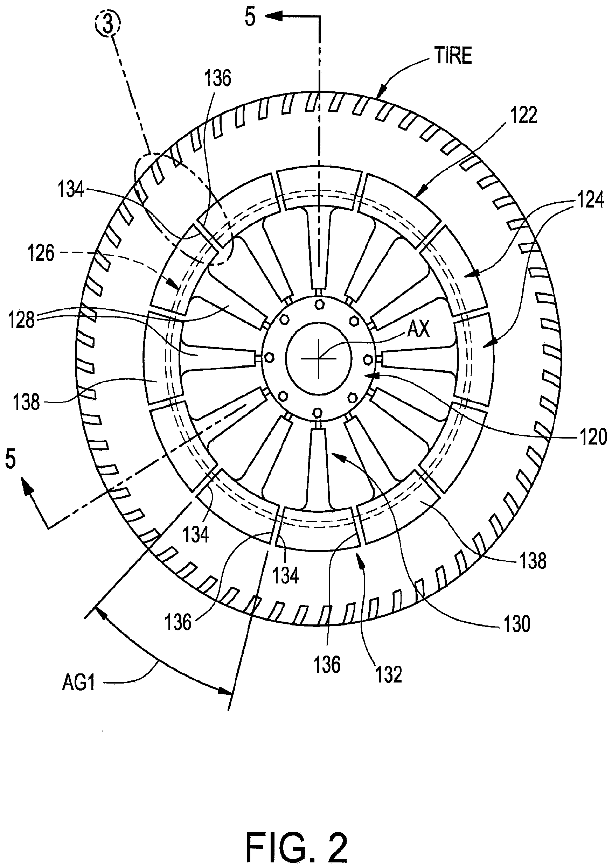

Segment bodies **128** can extend in a direction transverse to longitudinal axis **AX** between an end surface **134** and an end surface **136** that is spaced apart from end surface **134**. In a preferred arrangement, end surfaces **134** and **136** are oriented at an angle relative to one another, such as is represented in FIG. 2 by reference dimension **AG1**. In a preferred arrangement, retread rim assembly **122** will include between three (3) and thirty (30) rim segments. In one exemplary construction, the angle between end surfaces **134** and **136** can have a value within a range $AG_R$ determined by the equation:

$$AG_R \cong \frac{360}{n} \pm \frac{360}{10n}$$

where "n" is equal to the number of rim segments from which retread rim assembly **122** is formed. In a preferred arrangement, retread rim assembly **122** can include at least six (6) of rim segments **124** and angle **AG1** can have a value within a range of acute angles. It will be appreciated, however, that other configurations and/or arrangements could alternately be used without departing from the subject matter of the present disclosure.

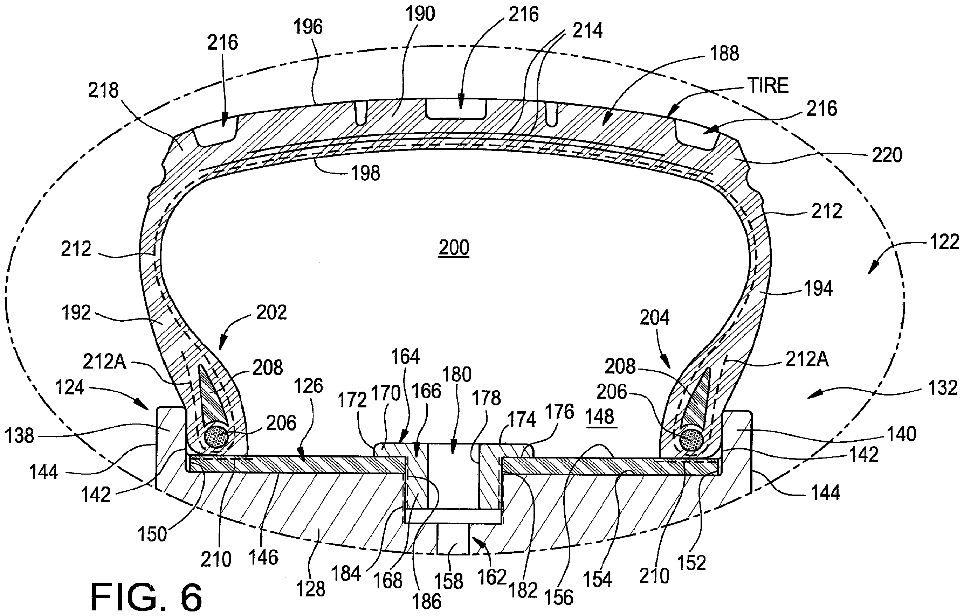

As identified in at least FIGS. 5 and 6, segment bodies **128** can include an edge(or side) wall **138** and an edge (or side) wall **140** that is spaced longitudinally from edge wall **138**. Each of edge walls **138** and **140** can include a side surface portion **142** facing toward the other of the edge walls and a side surface portion **144** facing axially outwardly away from the other of the edge walls. Additionally, segment bodies **128** can include a base surface portion **146** that extends axially between edge walls **138** and **140**. In a preferred arrangement, edge walls **138** and **140** together with base surface portion **146** extend arcuately between end surfaces **134** and **136**. In such case, base surface portions **146** and side surface portions **142** can together at least partially define a rim channel segment **148** extending arcuately along outer periphery **132** of rim segments **124**. In an assembled condition of the rim segments, rim channel segments **148** can at least partially define an annular channel (not numbered) extending about longitudinal axis **AX** and having an open end (not numbered) facing radially outwardly.

Retread band **126** is shown in FIGS. 2-6 as having an outer edge **150** and an outer edge **152** that is space longitudinally from outer edge **150** and defines a band length (not identified) therebetween. Retread band **126** also includes surfaces **154** and **156** that face generally opposite one another and extend axially between outer edges **150** and **152**. Surfaces **154** and **156** are spaced apart from one another and at least partially thickness or height (not identified) of the retread band. In an installed condition, retread band **126** extends peripherally around rim segments **124** along and within the annular channel formed by rim channel segments **148**. In some cases, retread band **126** can be of a construction that permits installation with either of the surfaces facing radially inward or outward. In a preferred construction, however, retread band **126** can be constructed such that surface **154** functions as an inner surface disposed in facing relation to base surface portions **146** and surface **156** functions as an outer surface facing radially outward from the base surface portions.

In a preferred arrangement, retread band **126** is at least partially formed from one or more elastomeric materials. In such case, the retread band can be circumferentially tensioned around rim segments **124** to bias the plurality of rim segments radially inward such that adjacent rim segments can be disposed in abutting engagement with one another in a free, natural or otherwise unexpanded condition of the retread rim assembly, such as is shown in FIG. 4, for example. In a preferred construction, a retread band in accordance with the subject matter of the present disclosure can include at least one reinforcing ply at least partially embedded within the elastomeric material of the retread band. Additionally, or as an alternately preferred construction, the retread band in accordance with the subject matter of the present disclosure can have a cross-sectional shape with a base portion and a rib portion projecting beyond the base portion in one of a radially-inward direction and a radially-outward direction.

Regardless of which combination of the various features and elements that are included in the construction of a retread band in accordance with the subject matter of the present disclosure, the elastomeric nature of the retread band permits a retread rim assembly in accordance with the subject matter of the present disclosure to be variable between a first condition in which the retread rim assembly has a first outermost radial dimension and a second condition in which the retread rim assembly has a second outermost radial dimension that is greater than the first outermost radial dimension. During use in the first condition, the corresponding first outermost radial dimension is preferably of a size suitable for transitioning an associated tire onto and off of the retread rim assembly. During use in the second condition, the corresponding second outermost radial dimension is preferably of a size suitable for engaging and supporting the associated tire on the retread rim assembly. In a preferred arrangement, the retread rim assembly can be expanded radially outward such that the outer surface of the retread band forms a substantially fluid-tight seal with one or more surfaces or portions of the associated tire.

It will be appreciated that such radially-outward expansion of a retread rim assembly in accordance with the subject matter of the present disclosure can be effectuated in any suitable manner. As one example, actuation and support hub **120** can be operative to support retread rim assembly **122** on support arm **118** or another structure of tire retreading machine **100** for rotation about longitudinal axis **AX.** Additionally, hub **120** can be operative to engage rim segments **124**, and selectively urge or otherwise displace the rim segments in a radially outward direction. In some cases, the actuation and support hub can be electrically actuated. In other cases, the actuation and support hub can urge the rim segments radially outward using pressurized gas or other pneumatic actuation.

In some cases, it may be desirable to provide for the transfer of pressurized gas into and/or out of at least the annular channel formed by rim channel segments **148** of rim segments **124.** In cases in which retread rim assembly **122** is used in connection with associated pneumatic or tubeless tires, such as associated tire **TIRE**, for example, such transfer of pressurized gas can also be operative to inflate and deflate the pneumatic tire. It will be appreciated that any suitable combination of features, components and/or systems can be used to provide for such transfer of pressurized gas. For example, segment body **128** of one or more of rim segments **124** can include a gas transfer passage **158** extending from a passage end **160** disposed along inner end **130** of the segment body to a passage end **162** disposed toward outer periphery **132** of the segment body. In a preferred arrangement, passage end **160** can be disposed in fluid communication with pressurized gas system **108** or another suitable pressurized gas source and/or control device. And, passage end **162** can be disposed in fluid communication along base surface portion **146** of segment body **128.**

As shown in FIGS. 5 and 6, a fitting **164** can be disposed in fluid communication between passage end **162** of gas transfer passage **158** and the annular channel formed by rim channel segments **148**. In some cases, fitting **164** be constructed in a manner suitable for permitting pressurized gas transfer, as discussed above, as well as for retaining the retread band on or along the rim segment to which the fitting is secured. In a preferred arrangement, a plurality of fittings **164** are used, and can be disposed on or along adjacent ones of the plurality of rim segments. In other cases, the plurality of fittings can be spaced apart from one another with one or more rim segments disposed between adjacent ones of fittings **164.**

It will be appreciated that fittings of any suitable type, kind, construction and/or configuration can be used. For example, fitting **164** can include a fitting body **166** formed from a suitable material or combination of materials, such as a metal (e.g., brass, aluminum and/or steel) and/or a polymeric material (e.g., a rigid, reinforced or unreinforced thermoplastic). Fitting body **166** can include a connector wall portion **168**, a flange wall portion **170** that extends radially outward from connector wall portion **168** to an outer peripheral edge **172**. In an installed condition of fitting **164**, flange wall portion **170** can include a surface **174** facing toward the annular channel formed by rim channel segments **148** and a surface **176** facing toward retread band **126**. Fitting body **166** can also include a passage surface **178** that at least partially defines a fitting passage **180** extending through fitting body **166**. In an installed condition of fitting **164**, fitting passage **180** can be disposed in fluid communication with passage end **162** of gas transfer passage **158** and the annular channel formed by rim channel segments **148**.

As shown in FIGS. 5 and 6, fitting **164** extends through a hole or opening **182** in retread band **126**. It will be appreciated that such holes or openings can be provided in the retread band at the time of manufacture. Or, alternately, such holes or openings can be formed in a suitable manner during the manufacture of retread rim assembly **122**. Regardless of the manner in which openings **182** are provided, fitting **164** is shown as extending through the opening in the retread band and being operatively secured on or along rim segments **124**. It will be appreciated that the fittings can be attached in any suitable manner. For example, a securement feature **184**, such as one or more helical threads, for example, can be formed on or along segment body **128** adjacent passage end **162**. A securement feature **186** can be provided on or along fitting body **166** that is cooperative with securement feature **184**. For example, one or more helical threads (not numbered) can be provided on or along connector wall portion **168** of the fitting body. In this manner, fittings **164** can be threadably engaged or otherwise secured on or along a corresponding one of rim segments **124**. In some cases, fittings **164** can be threadably engaged with the rim segments such that surfaces **176** of flange wall portions **170** are disposed in abutting engagement with surface **156** of retread band **126**. It will be appreciated that in an installed condition of a pneumatic or tubeless tire, such as is represented by associated tire **TIRE**, fitting passage **180** will also be disposed in fluid communication with the tire chamber of the associated pneumatic tire.

For purposes of discussion of operating environment and use, and without operating as a limitation, associated tire **TIRE** is shown in FIGS. 1-3, 5, 6 and 16-22 as representing one example of an associated tire that is used, worn or otherwise in condition for retreading or other reconditioning. As identified in FIGS. 5 and 6, associated tire **TIRE** is in the form of a pneumatic tire that extends circumferentially about an axis **AX** and includes a tire casing **188** that has a crown portion **190** and axially-spaced sidewalls **192** and **194** that extend radially inward from along crown portion **190** The crown portion includes an outer surface **196** and an inner surface **198** that at least partially defines a tire cavity **200**.

Associated tire **TIRE** can also include bead areas **202** and **204** (which, in some cases, may be alternately referred to as "mounting beads" or "mounting bead areas") that respectively form the radially-inward extent of sidewalls **192** and **194**. It will be appreciated that bead areas having a wide variety of combinations of shapes, sizes, features and elements have been developed and can be included on associated tire **TIRE** without departing from the subject matter of the present disclosure. Non-limiting examples of such features and elements include bead toe features, bead heel features, bead flippers, bead chippers, and chaffing strips. Regardless of the one or more other features and/or elements that may be included on or along the bead areas of the associated tire, the bead areas of can also include at least one bead reinforcing element. In the arrangement in FIGS. 5 and 6, for example, bead areas **202** and **204** of associated tire **TIRE** are each shown as including bead reinforcing elements in the forms of a bead core **206** and a bead filler **208**. Additionally, it will be appreciated that bead areas **202** and **204** are dimensioned or otherwise adapted to form an air-tight relationship along bead seats of a conventional rim or wheel in an installed condition of the original and retreaded tire, as is well understood in the art.

In a preferred arrangement, a retread rim assembly in accordance with the subject matter of the present disclosure is displaceable between the first and second conditions of use. As described above, in the first condition of use, the retread rim assembly has corresponding first radial dimension that is of a size suitable for transferring bead areas **202** and **204** of associated tire **TIRE** onto and off of the retread rim assembly. And, in the second condition of use, the retread rim assembly has a corresponding second radial dimension that is of a size suitable for engaging and securing the associated tire on the retread rim assembly as well as for forming a substantially fluid-tight seal on or along bead areas **202** and **204** of associated tire **TIRE**. In a preferred arrangement, bead areas **202** and **204** are disposed in abutting engagement along surface **156** of retread band **126**, and can form a substantially fluid-tight seal therebetween, as is schematically represented in FIG. 6 by dashed lines **210**.

As is well known in the art, tires commonly include one or more plies containing a multiplicity of closely-spaced reinforcing cords or wires that extend across the crown portion of the tire casing and radially inward along the sidewalls of the tire casing. In the arrangement in FIGS. 5 and 6, for example, tire casing **188** is shown as including a reinforcing layer or ply **212** that extends across crown portion **190** and along sidewalls **192** and **194** toward bead areas **202** and **204**. Further reinforcement of the tire can be provided by one or more annular belts, such as belts **214** that extend circumferentially along crown portion **190**, for example. Reinforcing ply **212** and belts **214** can be fabricated of any suitable material or combination of materials, such as steel wires, polymeric cords and/or suitable textile cords, for example, as is well known in the art. Associated tire **TIRE** can also include a tread **216** that extends circumferentially about tire casing **188** and extends axially between opposing first and second shoulders **218** and **220**, which shoulders generally transition tread **216** into sidewalls **192** and **194**, respectively. Tread **216** can include any suitable combination of grooves, tread elements or lugs and tread void areas in any suitable size, shape and/or pattern, as is well known in the art.

Bead cores **206** can take the form of substantially-inextensible, endless rings that are embedded within bead areas **202** and **204**. One function of bead reinforcing elements (e.g., bead cores **206**) is to establish and maintain the cross-sectional dimension of bead areas **202** and **204** and the openings formed thereby such that the associated tire can be mounted along corresponding bead seats of an associated wheel, such as may be established by industry standards and conventions. Importantly, bead cores **206** also establish and maintain the cross-sectional dimension of bead areas **202** and **204** and the openings formed thereby during engagement with a retread rim assembly in accordance with the subject matter of the present disclosure. In this manner, retread rim assembly **122** can engage and secure associated tire **TIRE** on the retread rim assembly as well as form a substantially fluid-tight seal on or along bead areas **202** and **204** of associated tire **TIRE.**

Another function of bead reinforcing elements (e.g., bead cores **206**) is to anchor reinforcing layers or plies, such as reinforcing ply **212**, for example, as the same extends across the tire carcass between the opposing bead areas. It will be appreciated that the reinforcing elements of such one or more reinforcing plies can be anchored by bead cores **206** in any suitable manner. For example, reinforcing ply **212** is shown in FIGS. 5 and 6 as extending from along sidewalls **192** and **194** toward bead areas **206**. Reinforcing ply **212** extends in a radially-inward direction along an axially-inward side of bead cores **206** and through the opening formed by the bead core. Outer ends **212A** of reinforcing ply **212** are turned up along an axially-outward side of bead cores **206** and return in a radially-outward direction along sidewalls **192** and **194**. Bead fillers **208** are shown disposed adjacent bead cores **206** in an area between reinforcing ply **212** and outer ends **212A**, and can operate to at least partially fill any gap between reinforcing ply **212** and outer end **212A** and/or can operate to provide added rigidity and/or stiffness to the bead area. It will be appreciated, however, that other arrangements and/or configurations could alternately be used, and that the arrangement shown is merely exemplary.

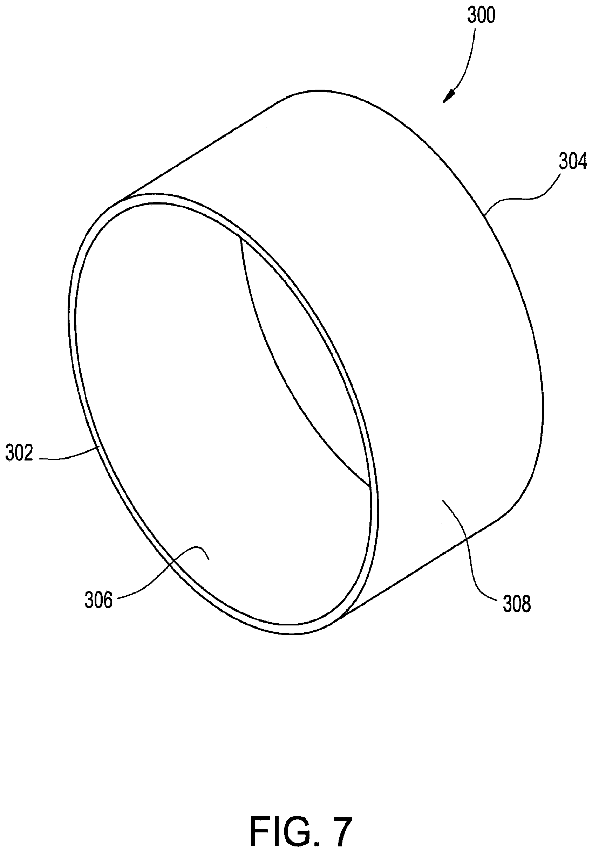

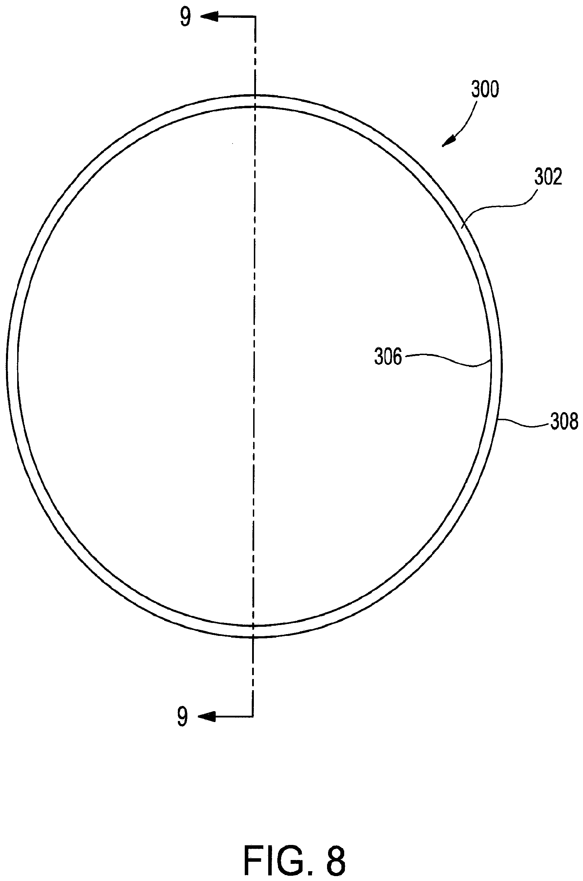

Having described an example of a retread rim assembly (i.e., retread rim assembly **122**) in accordance with the subject matter of the present disclosure, one example of a retread band in accordance with the subject matter of the present disclosure that is suitable for use as retread band **126**, which is shown and described above in connection with FIGS. 1-6, will now be described in connection with FIGS. 7-10. As shown therein, one example of a retread band **300** can have a longitudinally-extending axis **AX** and a midplane **MP** oriented transverse to longitudinal axis **AX.**

It will be appreciated that retread band **300** can be of any suitable size, shape, construction and/or configuration in accordance with the present disclosure. For example, retread band **300** is shown in FIGS. 7-10 as including an edge **302** and an edge **304** disposed in longitudinally-spaced relation to edge **302**. Edges **302** and **304** extend annularly about longitudinal axis **AX** and can at least partially define a longitudinal length of retread band **300** therebetween. Retread band **300** can also include a surface **306** and a surface **308** that is spaced apart from surface **306** in a radial direction to at least partially define a height or thickness of retread band **300**. In one example of a suitable construction, retread band **300** can have a cross-sectional configuration or shape that is at least approximately rectangular. It will be appreciated, however, that other configurations and/or arrangements could alternately be used, such as are shown and described hereinafter.

In an installed condition of retread band **300**, such as is shown and described in connection with retread band **126** in FIGS. 1-6, edges **302** and **304** can respectively correspond to edges **150** and **152** with surfaces **306** and **308** respectively corresponding to surfaces **154** and **156** of retread band **126**. In which case, surface **306** can function as an inner surface disposed in facing relation to base surface portions **146** and surface **308** can function as an outer surface facing radially outward from the base surface portions of rim segments **124.**

As discussed above, retread bands in accordance with the subject matter of the present disclosure are at least partially formed from elastomeric material such that the retread bands can be circumferentially tensioned around the plurality of rim segments of the retread rim assembly to thereby bias the plurality of rim segments radially inward. In this manner, adjacent rim segments can be disposed in abutting engagement with one another in a free, natural or otherwise unexpanded condition of the retread rim assembly, such as is shown in FIG. 4, for example. It will be appreciated that retread bands in accordance with the subject matter of the present disclosure can include any suitable combination of one or more elastomeric materials.

As one example, retread band **300** can include a layer **310** that is at least partially formed from one elastomeric material. Retread band **300** can also include a layer **312** that is disposed along layer **310**. Layer **312** can be at least partially formed from an elastomeric material that, in a preferred construction, is different from the elastomeric material of layer **310**. Retread band **300** can further include a layer **314** disposed along layer **310** opposite layer **312**. Again, layer **314** can be at least partially formed from an elastomeric material that, in a preferred construction, is different from the elastomeric material of at least layer **310.**

In some cases, the elastomeric material of layer **310** can be an elastomeric material, such as a synthetic rubber, a natural rubber or a thermoplastic elastomer, that is suitable for undergoing many hundreds or thousands of expansion and recovery cycles without experiencing significant circumferential elongation or stretching. In many cases, materials having elastomeric properties suitable for such applications may have one or more other properties or characteristics that are less well suited for such use. For example, the elastomeric material of layer **310** may have an abrasion-resistance property or characteristic that results in undesirable wear performance during extended use. In such cases, the elastomeric material of layer **312** can have a greater abrasion-resistance property or characteristic than the elastomeric material of layer **310**. Additionally, or in the alternative, the elastomeric material of layer **314** can have a greater abrasion-resistance property or characteristic than at least the elastomeric material of layer **310**. In this manner, the resulting combination of different elastomeric materials result in a construction for retread band **300** that can provide overall improved performance over known constructions.

Additionally, in some cases, retread band **300** can, optionally, include a release layer or coating **316** disposed on or along layer **314** opposite layer **310**. In some cases, layer **316** can at least partially form surface **308** of retread band **300**. In other cases, surface **308** can be substantially entirely formed or otherwise established by layer **314** with coating **316** extending over less than the full area of surface **308**. For example, release coating **316** can extend longitudinally along axially outward portions of surface **308** adjacent edges **302** and **304** in the annular zones in which bead areas **202** and **204** of associated tire **TIRE** are likely to engage retread band **300**.

In a preferred construction, retread band **300** can also include at least one reinforcing layer or ply **318** that is at least partially embedded within at least one layer of elastomeric material from which the retread band is formed. It will be appreciated that the at least one reinforcing ply can be constructed from any suitable material or combination of materials capable of contributing to the desired performance characteristics of the retread band and, preferably, include one or more reinforcing filaments, yarns and/or cords, such as are discussed hereinafter. For purposes of convenience of discussion and without operating as a limitation, the one or more reinforcing filaments, yarns and/or cords are collectively referred to herein as "reinforcing elements". The one or more reinforcing elements can be of any suitable type, kind and/or construction and can be formed from any suitable material or combination of materials. For example, the one or more reinforcing elements could take the form of monofilaments or twisted strands of fibers. Additionally, the one or more reinforcing elements could, for example, be formed from natural fibers (e.g., cotton yarn) or polymeric filaments (e.g., nylon or aramid cords).

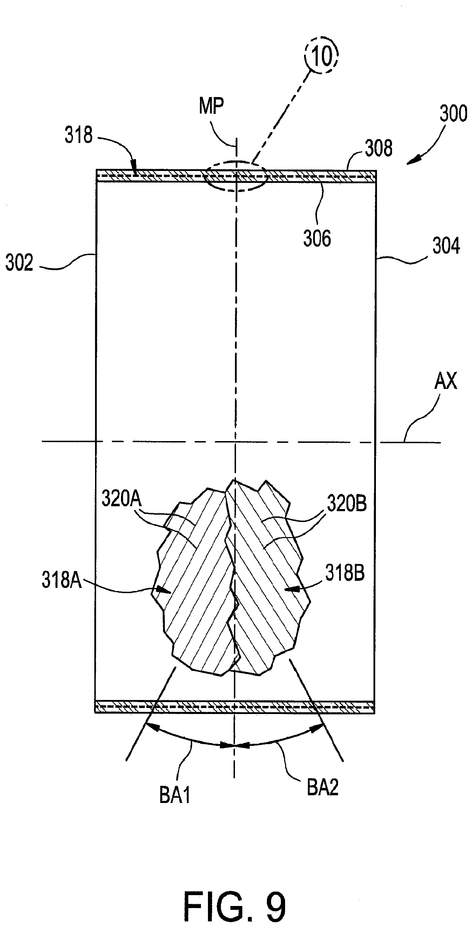

Additionally, in a preferred construction, at least one reinforcing ply **318** can extend lengthwise along at least a portion of retread band **300** and annularly about axis **AX**. In some cases, the at least one reinforcing ply can extend in a lengthwise direction between edged **302** and **304** such that one or more reinforcing elements are exposed therealong. Furthermore, it will be appreciated that the one or more reinforcing filaments, yarns and/or cords of the at least one reinforcing ply can be disposed in any suitable arrangement and/or configuration. For example, retread band **300** can include a single reinforcing ply **318A** that includes a plurality of reinforcing elements **320A** disposed at a bias angle relative to midplane **MP**, as is represented in FIG. 9 by reference dimension **BA1**. In cases in which a single reinforcing ply is used, bias angle **BA1** of reinforcing elements **320A** is preferably an acute angle within a range of from approximately zero (0) degrees to approximately ten (10) degrees.

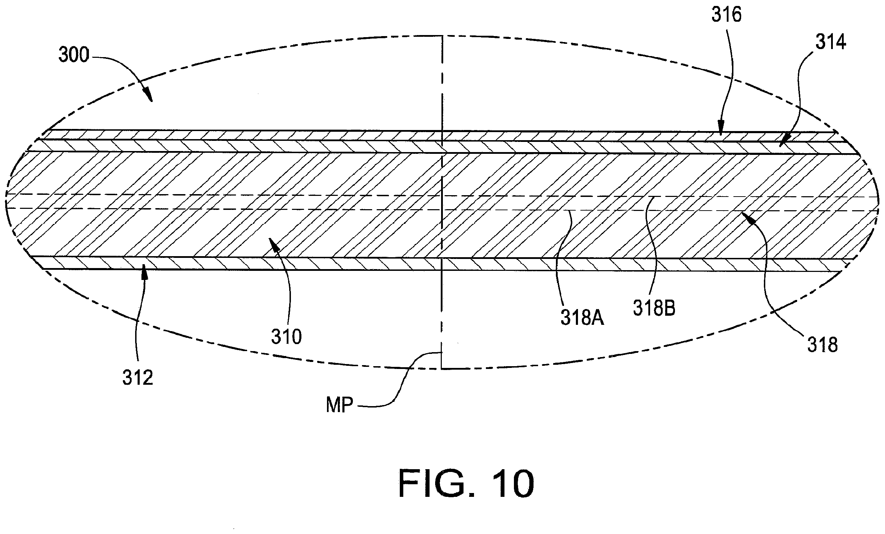

In other cases, the at least one reinforcing ply can include at least two reinforcing plies **318A** and **318B** with one of the reinforcing plies spaced radially outward from the other reinforcing ply, such as is shown in FIG. 10, for example. In such cases, reinforcing plies **318A** and **318B** can each respectively include a plurality of reinforcing elements **320A** and **320B**. In which case, the plurality of reinforcing elements are preferably disposed at a non-zero bias angle with respect to midplane **MP** such that the reinforcing elements extend both longitudinally and peripherally along the reinforcing plies. As shown in FIG. 9, for example, reinforcing ply **318A** can include reinforcing elements **320A** disposed at a bias angle that is represented by reference dimension **BA1**, and reinforcing ply **318B** can include reinforcing elements **320B** disposed at a bias angle that is represented by reference dimension **BA2**. It will be appreciated that any suitable bias angle or range of bias angles can be used for reinforcing elements **320A** and **320B**, such as a bias angle within a range of from approximately zero (0) degrees to approximately thirty (30) degrees, for example. In a more preferred construction bias angles **BA1** and **BA2** can be within a range of from approximately ten (10) degrees to approximately twenty five (25) degrees. Additionally, it will be appreciated that the reinforcing elements of the at least two reinforcing plies can be disposed at the same or a different bias angle with respect to one another. In one exemplary arrangement, such as is shown in FIG. 9, bias angles **BA1** and **BA2** are at least approximately equal to one another but are oriented in opposing directions.

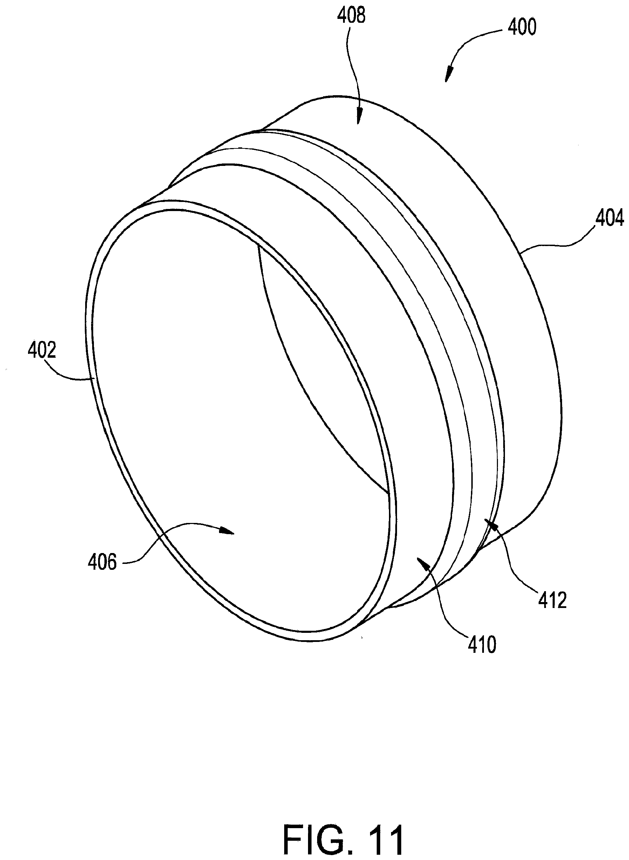

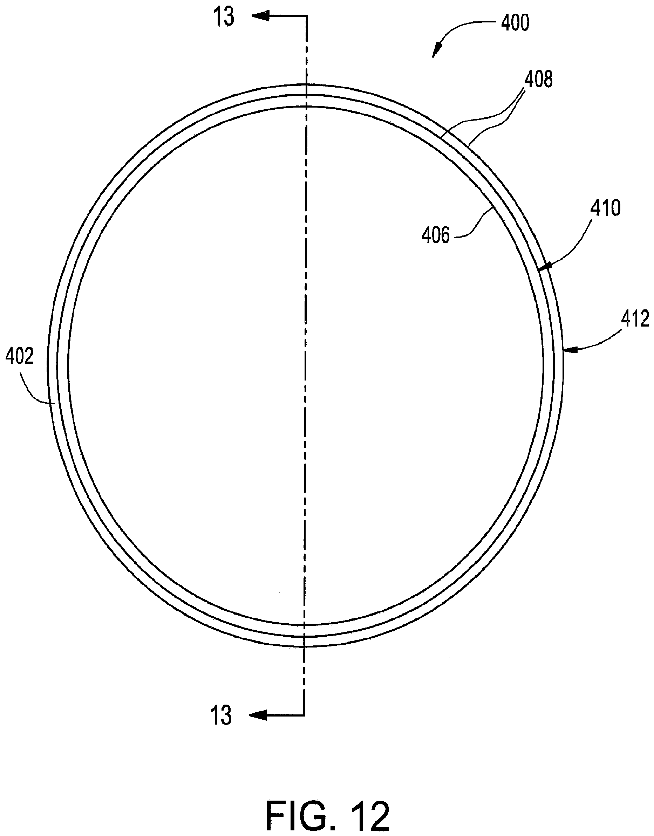

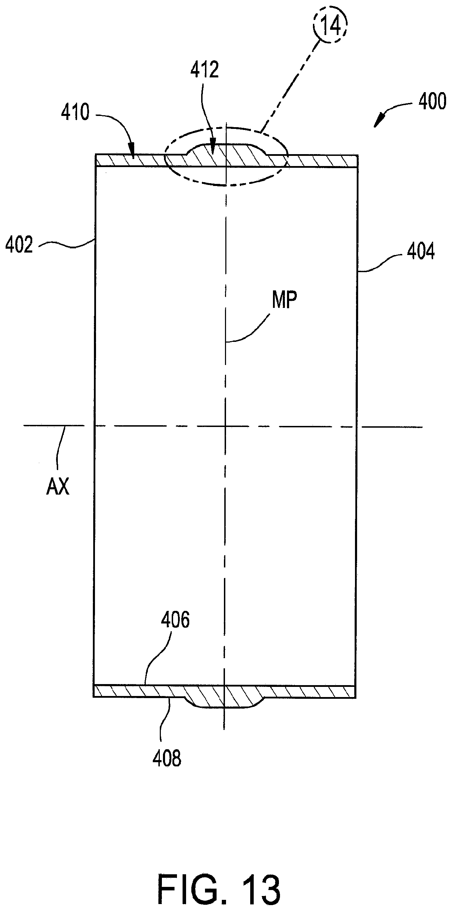

Again, having previously described an example of a retread rim assembly (i.e., retread rim assembly **122**) in accordance with the subject matter of the present disclosure, another example of a retread band in accordance with the subject matter of the present disclosure that is suitable for use as retread band **126**, which is shown and described above in connection with FIGS. 1-6, will now be described in connection with FIGS. 11-15. As shown therein, another example of a retread band **400** can have a longitudinally-extending axis **AX** and a midplane **MP** oriented transverse to longitudinal axis **AX**.

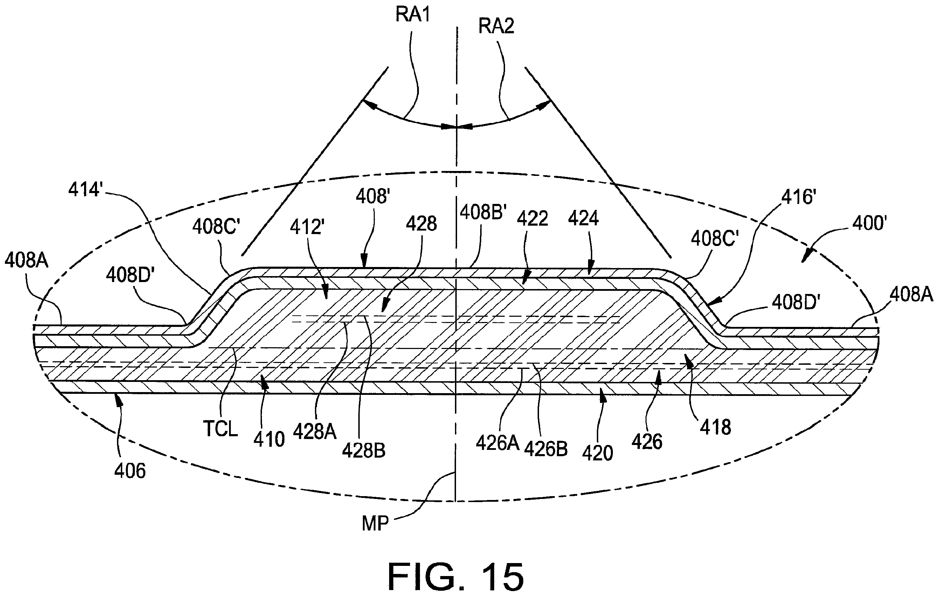

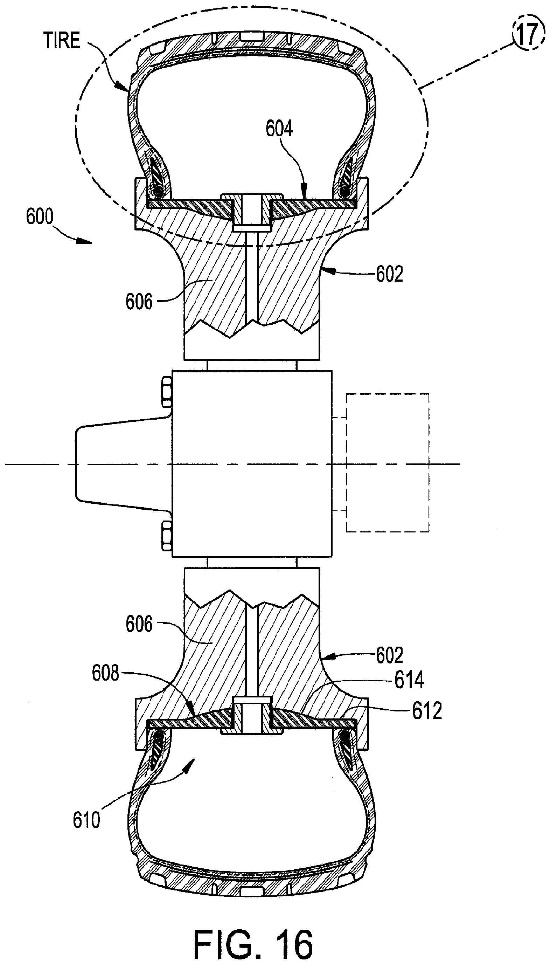

It will be appreciated that retread band **400** can be of any suitable size, shape, construction and/or configuration in accordance with the present disclosure. For example, retread band **400** is shown in FIGS. 11-15 as including an edge **402** and an edge **404** disposed in longitudinally-spaced relation to edge **402**. Edges **402** and **404** extend annularly about longitudinal axis **AX** and can at least partially define a longitudinal length of retread band **400** therebetween. Retread band **400** can also include a surface **406** and a surface **408** that is spaced apart from surface **406** in a radial direction to at least partially define a height or thickness of retread band **400**. In one example of a suitable construction, retread band **400** can have a cross-sectional configuration or shape with a base portion **410** that is at least approximately rectangular and a rib portion **412** that projects radially outward from along base portion **410**. FIG. 15 illustrates an alternate construction of a retread band **400'** that includes a rib portion **412'** having an alternate shape in comparison with rib portion **412** in FIGS. 11-14. It will be appreciated, however, that other configurations and/or arrangements could alternately be used. For example, a retread band can have one or more rib portions that extend radially inward from along the base portion, such as are shown and described herein in connection with FIGS. 16-22, for example.

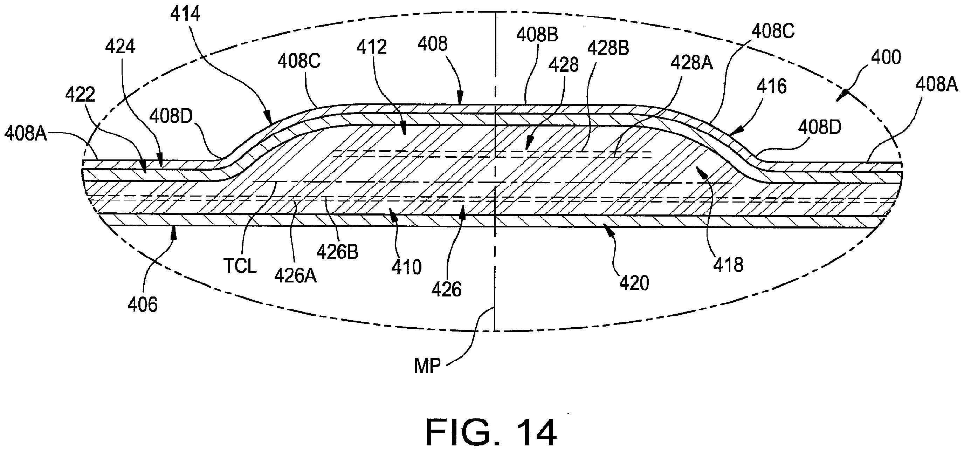

As shown in FIGS. 14 and 15, base portion **410** and rib portions **412** and **412'** respectively of retread bands **400** and **400'** are shown as being disposed along opposing sides of theoretical construction line **TCL**. It is to be recognized and understood that line **TCL** is included solely of illustrative purposes to approximate a demarcation between the base portion and the rib portions, and is not intended to represent an actual element or component of the retread bands or a specific position, size or proportion of the base and rib portions relative to one another.

As discussed above, base portion **410** of retread band **400** and **400'** can have an approximately rectangular cross-sectional shape or configuration. Rib portions **412** and **412'** project radially outward from along base portion **410** and separate surface **408** into at least one base surface portion **408A** and rib surface portions **408B** and **408B'**. In the arrangement shown in FIGS. 11-15, rib portions **412** and **412'** are approximately centered along midplane **MP** of the retread bands. As such, two base surface portions **408A** are formed along opposing sides of the rib portions adjacent edges **402** and **404**.

As shown in FIGS. 11-14, rib portion **412** extends longitudinally between rib edges **414** and **416**, which have a curvilinear configuration suitable for facilitating the transfer of an associated tire onto and off of the retread rim assembly. Rib edges **414** and **416** can, optionally, include one or more transition portions extending between and operatively connecting the rib edges with base surface portions **408A** and/or rib surface portions **408B** and/or **408B'**. In the arrangement shown in FIGS. 11-14, transition surface portions **408C** and **408D** extend between and operatively connect rib portions **414** and **416** with respective ones of base surface portions **408A** and rib surface portion **408B**. In a preferred arrangement, transition surface portions **408C** and **408D** have a curvilinear construction suitable for facilitating the transfer of an associated tire onto and off of the retread rim assembly.

As shown in FIG. 15, rib portion **412'** extend longitudinally between rib edges **414'** and **416'**, which have an approximately linear configuration with the rib edges oriented at an acute angle relative to midplane **MP** resulting in rib portion **412'** having a somewhat trapezoidal cross-sectional shape. The orientation of rib edges **414'** and **416'** is represented in FIG. 15 by reference dimensions **RA1** and **RA2**. It will be appreciated that any suitable angles or range of angles can be used for rib edges **414'** and **416'**, such as angles within a range of from approximately twenty (20) degrees to approximately forty five (45) degrees, for example. In a more preferred construction angles **RA1** and **RA2** can be within a range of from approximately thirty (30) degrees to approximately thirty five (35) degrees. Additionally, it will be appreciated that the rib edges can be disposed at the same or a different angles with respect to one another. In one exemplary arrangement, such as is shown in FIG. 15, angles **RA1** and **RA2** are at least approximately equal to one another but are oriented in opposing directions.

Rib edges **414'** and **416'** can, optionally, include one or more transition portions extending between and operatively connecting the rib edges with base surface portions **408A** and/or rib surface portion **408B'**. In the arrangement shown in FIG. 15, transition surface portions **408C'** and **408D'** extend between and operatively connect rib portions **414'** and **416'** with respective ones of base surface portions **408A** and rib surface portion **408B'**. In a preferred arrangement, transition surface portions **408C'** and **408D'** have a curvilinear construction suitable for facilitating the transfer of an associated tire onto and off of the retread rim assembly.

In an installed condition of retread band **400**, such as is shown and described in connection with retread band **126** in FIGS. 1-6, edges **402** and **404** can respectively correspond to edges **150** and **152** with surfaces **406** and **408** respectively corresponding to surfaces **154** and **156** of retread band **126**. In which case, surface **406** can function as an inner surface disposed in facing relation to base surface portions **146** and surface **408** can function as an outer surface facing radially outward from the base surface portions of rim segments **124**.

As discussed above, retread bands in accordance with the subject matter of the present disclosure are at least partially formed from elastomeric material such that the retread bands can be circumferentially tensioned around the plurality of rim segments of the retread rim assembly to thereby bias the plurality of rim segments radially inward. In this manner, adjacent rim segments can be disposed in abutting engagement with one another in a free, natural or otherwise unexpanded condition of the retread rim assembly, such as is shown in FIG. 4, for example. It will be appreciated that retread bands in accordance with the subject matter of the present disclosure can include any suitable combination of one or more elastomeric materials.

As one example, retread band 400 can include a layer 418 that is at least partially formed from one elastomeric material. As shown in FIGS. 14 and 15, layer 418 can form at least some of base portion 410 and/or at least some of rib portions 412 and/or 412'. Retread band 400 can also include a layer 420 that is disposed along layer 418. Layer 420 can be at least partially formed from an elastomeric material that, in a preferred construction, is different from the elastomeric material of layer 418. Additionally, layer 420 can form at least some of base portion 410. Retread band 400 can further include a layer 422 disposed along layer 418 opposite layer 420. Again, layer 422 can be at least partially formed from an elastomeric material that, in a preferred construction, is different from the elastomeric material of at least layer 418. And, layer 422 can form at least some of base portion 410 and/or at least some of rib portions 412 and/or 412'.

In some cases, the elastomeric material of layer 418 can be an elastomeric material, such as a synthetic rubber, a natural rubber or a thermoplastic elastomer, that is suitable for undergoing many hundreds or thousands of expansion and recovery cycles without experiencing significant circumferential elongation or stretching. In many cases, materials having elastomeric properties suitable for such applications may have one or more other properties or characteristics that are less well suited for such use. For example, the elastomeric material of layer 418 may have an abrasion-resistance property or characteristic that results in undesirable wear performance during extended use. In such cases, the elastomeric material of layer 420 can have a greater abrasion-resistance property or characteristic than the elastomeric material of layer 418. Additionally, or in the alternative, the elastomeric material of layer 422 can have a greater abrasion-resistance property or characteristic than at least the elastomeric material of layer 418. In this manner, the resulting combination of different elastomeric materials result in a construction for retread band 400 that can provide overall improved performance over known constructions.

Additionally, in some cases, retread band 400 can, optionally, include a release layer or coating 424 disposed on or along layer 422 opposite layer 418. In some cases, layer 424 can at least partially form surface 408 of retread band 400. In other cases, surface 408 can be substantially entirely formed or otherwise established by layer 422 with coating 424 extending over less than the full area of surface 408. For example, release coating 424 can extend longitudinally along axially outward portions of surface 408 adjacent edges 402 and 404 in the annular zones in which bead areas 202 and 204 of associated tire TIRE are likely to engage retread band 400.

Retread bands 400 and/or 400' can, optionally, include one or more reinforcing layers or plies 426 that are at least partially embedded within at least one layer of elastomeric material from which base portion 410 of retread bands 400 and/or 400' is formed. Additionally, or in the alternative, retread bands 400 and/or 400' can, optionally, include one or more reinforcing layers or plies 428 that are at least partially embedded within at least one layer of elastomeric material from which rib portion 412 and/or 412' of retread bands 400 and/or 400' are formed. In some cases, a single reinforcing layer or ply can be at least partially embedded within either or both of the base portion and the rib portion. In other cases, two or more reinforcing layers or plies can be at least partially embedded within either or both of base portion 410 and rib portion 412, such as are respectively represented by dashed lines 426A/426B and 428A/428B in FIGS. 14 and 15, for example.

It will be appreciated that such one or more reinforcing layers or plies can be constructed from any suitable material or combination of materials capable of contributing to the desired performance characteristics of the retread band and, preferably, include one or more reinforcing filaments, yarns and/or cords, such as are discussed hereinafter. For purposes of convenience of discussion and without operating as a limitation, the one or more reinforcing filaments, yarns and/or cords are collectively referred to herein as "reinforcing elements". The one or more reinforcing elements can be of any suitable type, kind and/or construction and can be formed from any suitable material or combination of materials. For example, the one or more reinforcing elements could take the form of monofilaments or twisted strands of fibers. Additionally, the one or more reinforcing elements could, for example, be formed from natural fibers (e.g., cotton yarn) or polymeric filaments (e.g., nylon or aramid cords).

It will be appreciated that any one or more of reinforcing plies 426A, 426B, 428A and/or 428B can be constructed in a manner substantially similar to reinforcing plies 318, 318A, 318B and/or reinforcing elements 320A and/or 320B, which are shown and described in detail in connection with FIGS. 7-10. For purposes of brevity and ease of reading, a detailed description of reinforcing plies 426A, 426B, 428A and/or 428B and/or the reinforcing elements thereof is not repeated here. It is to be recognized and understood, however, that the foregoing description of reinforcing plies 318, 318A, 318B as well as reinforcing elements 320A and/or 320B, including all of the features and functions thereof as well as any components that associated therewith, is equally applicable to reinforcing plies 426A, 426B, 428A and/or 428B and/or the reinforcing elements thereof as if recited in full detail herein.

Having described one example of a retread rim assembly (i.e. retread rim assembly 122) and suitable retread bands (i.e. retread band 126), which are shown and described in connection with FIGS. 1-15, additional examples of retread rim assemblies and retread bands will now be described in connection with FIGS. 16-22. As shown herein, each example can have a longitudinally-extending axis AX and a midplane MP oriented transverse to longitudinal axis AX.

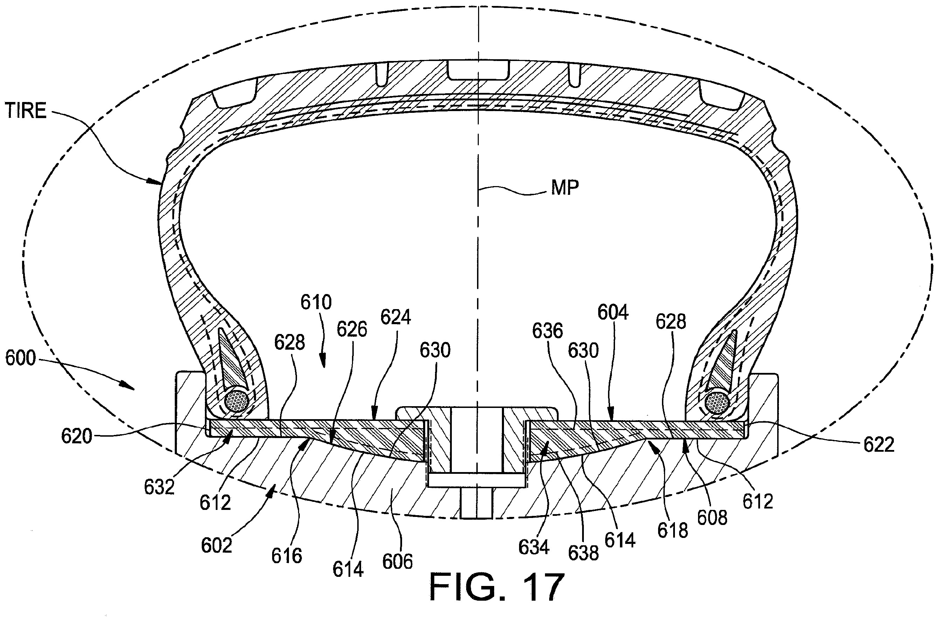

As identified in at least FIGS. 16 and 17, a retread rim assembly **600** is configured such that an associated tire **TIRE** can be supported thereon for performance of one or more operations of a tire retreading process, such as has been described in detail above. Retread rim assemblies **600** can include a plurality of rim segments **602** and one or more retread bands **604**. It will be appreciated that retread rim assemblies **600** including rim segments **602** thereof are substantially similar to retread rim assemblies **122** and rim segments **124** thereof. Thus, for purposes of brevity and ease of reading, a detailed description of retread rim assemblies **600** and/or rim segments **602** thereof is not repeated here. It is to be recognized and understood, however, that the foregoing description of retread rim assemblies **122** and rim segments **124**, including all of the features and functions thereof as well as any components that associated therewith, is equally applicable to retread rim assemblies **600** as well as rim segments **602** thereof as if recited in full detail herein.

As shown in FIGS. 16 and 17, rim segments **602** can include segment bodies **606** having a surface portion **608** that defines at least one segment channel **610** extending radially inward into segment bodies **606** about longitudinal axis **AX.** Rim segments **602** differ from rim segments **124** at least in that surface portion **608** of segment body **606** includes a base surface portion **612** and a groove surface portion **614** that at least partially defines an annular groove segment (not numbered) along surface portion **608** of segment channel **610.** Groove surface portion **614** can extend from groove edge **616** to a groove edge **618** that is spaced axially from groove edge **616.** In one exemplary arrangement, groove surface portion **614** can have a curvilinear cross-sectional shape or profile that can gradually increase from groove edge **616** to a maximum depth (not numbered) adjacent midplane **MP**, and then gradually decreasing to groove edge **618.** As such, the annular groove segment can have a curved or otherwise non-linear cross-sectional shape or profile.

It will be appreciated that retread bands **604** can include features and/or functions similar to those of retread bands **126**, **300** and **400** that are shown and described herein. For purposes of brevity and ease of reading, a detailed description of retread bands **604** may not be repeated here. It is to be recognized and understood, however, that the foregoing description of retread bands **126**, **300** and **400**, including all of the features and functions thereof as well as any components that associated therewith, is equally applicable to retread bands **604** as if recited in full detail herein.

Retread band **604** is shown in FIGS. 16 and 17 as having an outer edge **620** and an outer edge **622** that is spaced longitudinally from outer edge **620** and defines a band length (not identified) therebetween. Retread band **604** also includes surfaces **624** and **626** that face generally opposite one another and extend axially between outer edges **620** and **622**. Surfaces **624** and **626** are spaced apart from one another and at least partially define the thickness or height (not identified) of the retread band. As shown in FIGS. 16 and 17, retread band **604** can have a cross-sectional configuration or shape with a base portion **628** that is at least approximately rectangular and a rib portion **630** that projects in a radial direction from along base portion **628.** In the arrangement shown, rib portion **630** extends from along base portion **628** in a radially-inward direction.

Surface **626** can include a base surface portion **632** that is dimensioned for cooperative engagement with base surface portion **612** of segment body **606**, and a rib surface portion **634** that is dimensioned for cooperative engagement with the annular groove segment that is at least partially defined by groove surface portion **614** of segment body **628.** Additionally, retread band **604** can, optionally, include one or more reinforcing layers or plies that are at least partially embedded within at least one layer of elastomeric material from which retread band **604** is formed. Any such one or more reinforcing layers or plies can be included in either or both of base portion **628** and rib portion **630**, such as are represented in FIG. 17 by dashed lines **636** and **638.**

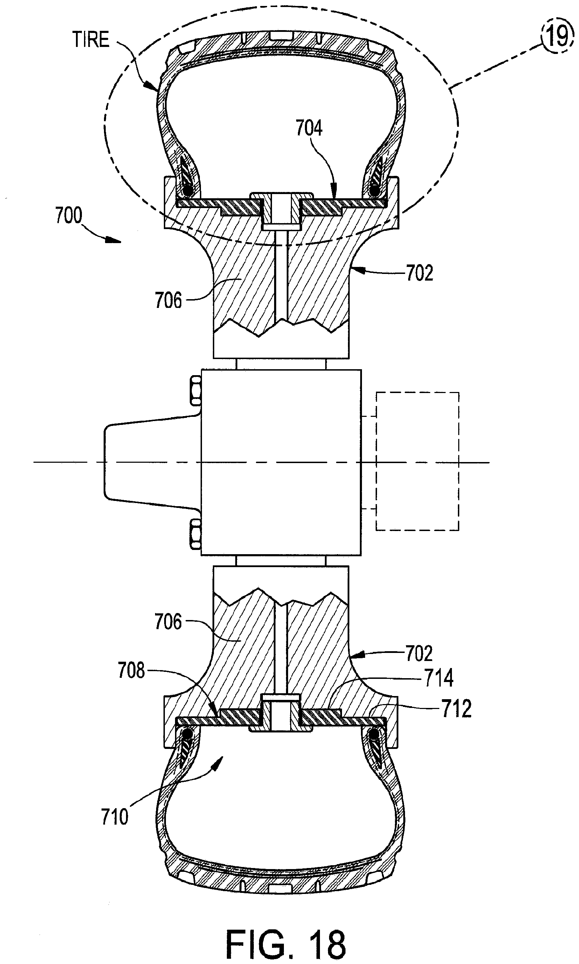

As identified in at least FIGS. 18-20, a retread rim assembly **700** is configured such that an associated tire **TIRE** can be supported thereon for performance of one or more operations of a tire retreading process, such as has been described in detail above. Retread rim assemblies **700** can include a plurality of rim segments **702** and one or more retread bands **704.** It will be appreciated that retread rim assemblies **700** including rim segments **702** thereof are substantially similar to retread rim assemblies **122** and rim segments **124** thereof. Thus, for purposes of brevity and ease of reading, a detailed description of retread rim assemblies **700** and/or rim segments **702** thereof is not repeated here. It is to be recognized and understood, however, that the foregoing description of retread rim assemblies **122** and rim segments **124**, including all of the features and functions thereof as well as any components that associated therewith, is equally applicable to retread rim assemblies **700** as well as rim segments **702** thereof as if recited in full detail herein.

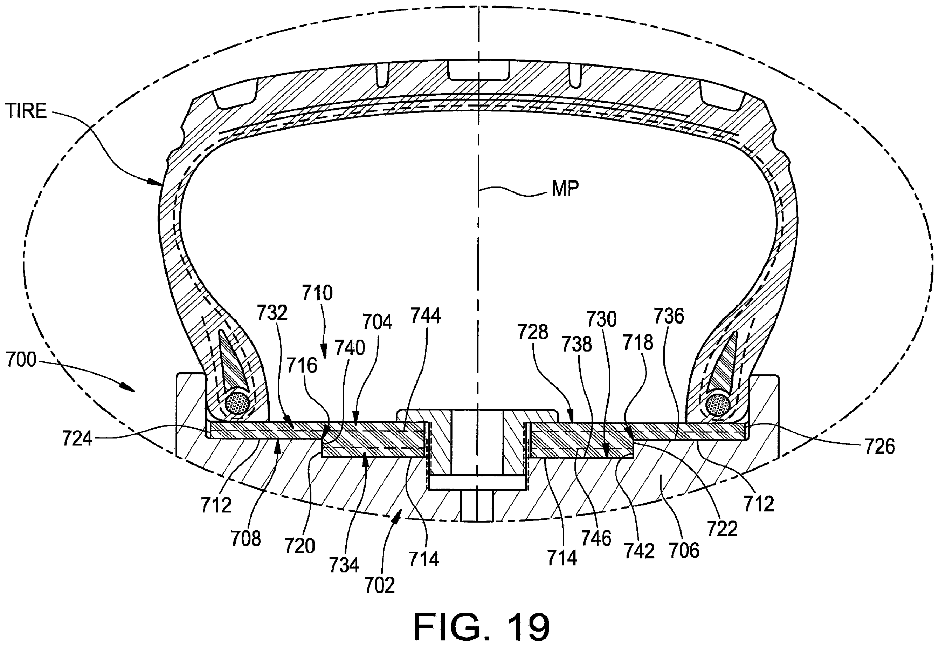

As shown in FIGS. 18 and 19, rim segments **702** can include segment bodies **706** having a surface portion **708** that defines at least one segment channel **710** extending radially inward into segment bodies **706** about longitudinal axis **AX.** Rim segments **702** differ from rim segments **124** at least in that surface portion **708** of segment body **706** includes base surface portions **712** and a groove surface portion **714** that at least partially defines an annular groove segment (not numbered) along surface portion **708** of segment channel **710.** Groove surface portion **714** can extend from groove edge **716** to a groove edge **718** that is spaced axially from groove edge **716.** Surface portion **708** can also include side surface portions **720** and **722**, which can extend radially inwardly into segment body **706** such as from along groove edges **716** and **718**, respectively, and further define the annular groove segment of the at least one segment channel. In some cases, side surface portions **720** and **722** can have an approximately linear cross-sectional profile, and can be oriented transverse to base surface portion **712** and groove surface portion **714** such that the annular groove segment has an approximately rectangular cross-sectional shape or profile.

Retread band **704** is shown in FIGS. 18 and 19 as having an outer edge **724** and an outer edge **726** that is spaced longitudinally from outer edge **724** and defines a band length (not identified) therebetween. Retread band **704** also includes surfaces **728** and **730** that face generally opposite one another and extend axially between outer edges **724** and **726**. Surfaces **728** and **730** are spaced apart from one another and at least partially define the thickness or height (not identified) of the retread band. As shown in FIGS. 18 and 19, retread band **704** can have a cross-sectional configuration or shape with a base portion **732** that is at least approximately rectangular and a rib portion **734** that projects in a radial direction from along base portion **732**. In the arrangement shown, rib portion **734** extends from along base portion **732** in a radially-inward direction.

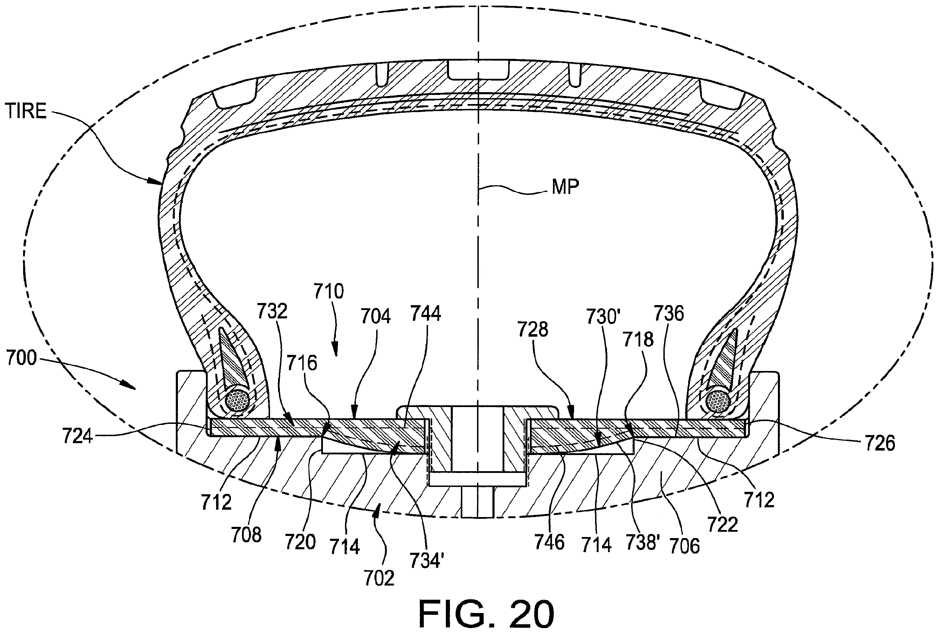

Surface **730** can include a base surface portion **736** that is dimensioned for cooperative engagement with base surface portion **712** of segment body **706**, and a rib surface portion **738** that is dimensioned for cooperative engagement with the annular groove segment that is at least partially defined by groove surface portion **714** of segment body **706**. Surface **730** can also include side surface portions **740** and **742** that are disposed in axially-spaced relation to one another and dimensioned for cooperative engagement with side surface portions **720** and **722** of surface portion **708** of segment body **706**. In such case, surface portions **708** and **730** can, in some cases, be in substantially continuously contact with one another between outer edges **724** and **726**. In an alternative construction, as shown in FIG. 20, a surface portion **730'** can at least partially define a rib portion **734'** that can include a rib surface portion **738'** having a curvilinear or other non-linear cross-sectional shape or profile, such as has been described above in connection with rib surface portion **634** in FIGS. 16 and 17, for example. In such case, it will be appreciated that only a portion of rib surface portion **738'** may contact one or more of groove surface portion **714** and/or side surface portions **720** and/or **722**.

Additionally, retread band **704** can, optionally, include one or more reinforcing layers or plies that are at least partially embedded within at least one layer of elastomeric material from which retread band **704** is formed. Any such one or more reinforcing layers or plies can be included in either or both of base portion **732** and rib portions **734**, such as are represented in FIGS. 19 and 20 by dashed lines **744** and **746**.

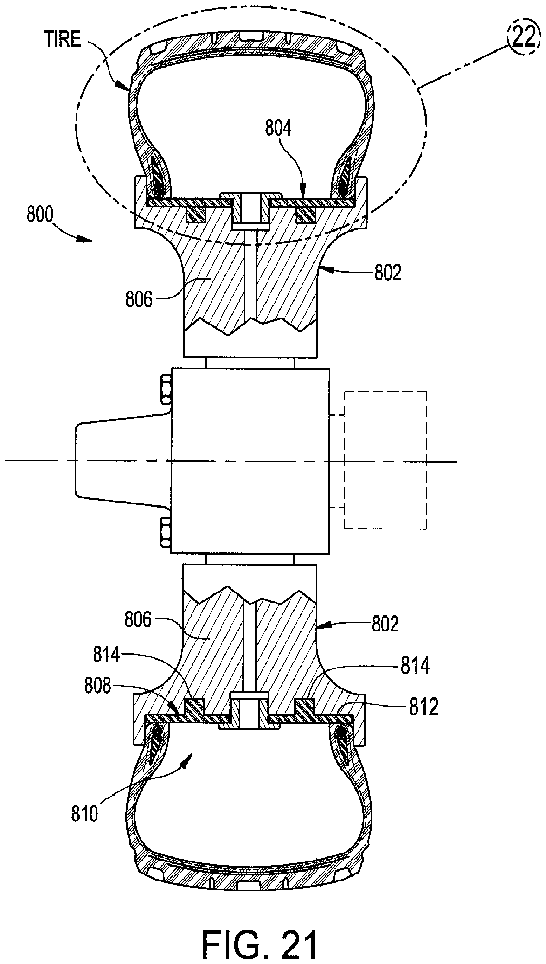

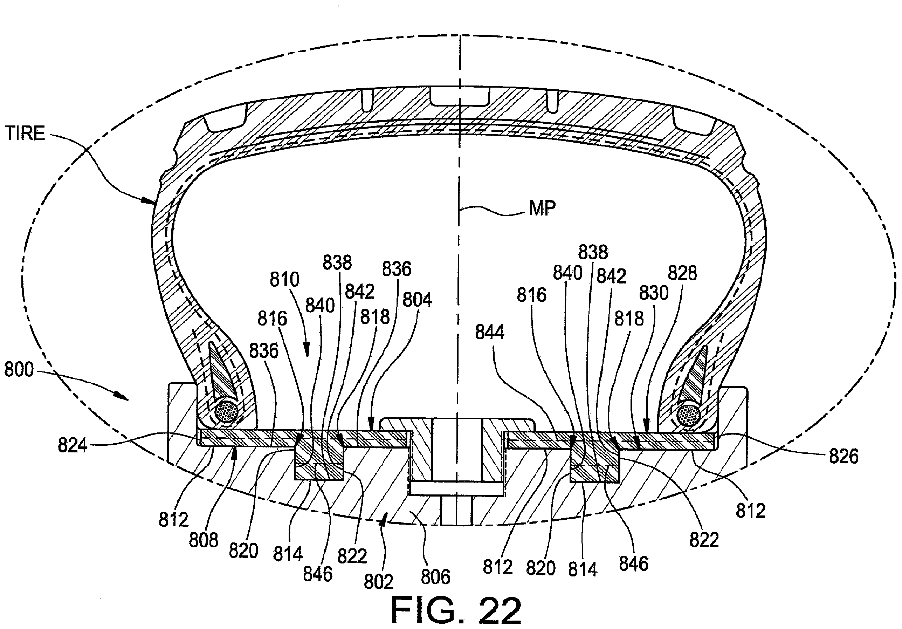

As identified in at least FIGS. 21 and 22, a retread rim assembly **800** is configured such that an associated tire **TIRE** can be supported thereon for performance of one or more operations of a tire retreading process, such as has been described in detail above. Retread rim assemblies **800** can include a plurality of rim segments **802** and one or more retread bands **804**. It will be appreciated that retread rim assemblies **800** including rim segments **802** thereof are substantially similar to retread rim assemblies **122** and rim segments **124** thereof. Thus, for purposes of brevity and ease of reading, a detailed description of retread rim assemblies **800** and/or rim segments **802** thereof is not repeated here. It is to be recognized and understood, however, that the foregoing description of retread rim assemblies **122** and rim segments **124**, including all of the features and functions thereof as well as any components that associated therewith, is equally applicable to retread rim assemblies **800** as well as rim segments **802** thereof as if recited in full detail herein.

As shown in FIGS. 21 and 22, rim segments **802** can include segment bodies **806** having a surface portion **808** that defines at least one segment channel **810** extending radially inward into segment bodies **806** about longitudinal axis **AX**. Rim segments **802** differ from rim segments **124** at least in that surface portion **808** of segment body **806** includes base surface portions **812** and groove surface portion **814** that are disposed in spaced relation to one another along opposing sides of midplane **MP**. Grooved surface portions **814** can each at least partially define an annular groove segment (not numbered) on opposing sides of midplane **MP** and along surface portion **808** of segment channel **810**.

Each of groove surface portions **814** can extend from groove edge **816** to a groove edge **818** that is spaced axially from groove edge **816**. Surface portion **808** can also include side surface portions **820** and **822**, which can extend radially inward into segment body **806** such as from along groove edges **816** and **818**, respectively, and can further define the annular groove segments. In some cases, side surface portions **820** and **822** can have an approximately linear cross-sectional profile, and can be oriented transverse to base surface portion **812** and groove surface portion **814** such that the annular groove segments have an approximately rectangular cross-sectional shape or profile.

Retread band **804** is shown in FIGS. 21 and 22 as having an outer edge **824** and an outer edge **826** that is spaced longitudinally from outer edge **824** and defines a band length (not identified) therebetween. Retread band **804** also includes surfaces **828** and **830** that face generally opposite one another and extend axially between outer edges **824** and **826**. Surfaces **828** and **830** are spaced apart from one another and at least partially define the thickness or height (not identified) of the retread band. As shown in FIGS. 21 and 22, retread band **804** can have a cross-sectional configuration or shape with a base portion **832** that is at least approximately rectangular and rib portions **834** that project in a radial direction from along base portion **832**. In the arrangement shown, rib portions **834** extends from along base portion **732** in a radially-inward direction.

Surface **830** can include base surface portions **836** that are dimensioned for cooperative engagement with base surface portion **812** of segment body **806**, and rib surface portions **838** that are dimensioned for cooperative engagement with the annular groove segments that are at least partially defined by groove surface portion **814** of segment body **806**. Surface **830** can also include side surface portions **840** and **842** that are disposed in axially-spaced relation to one another and dimensioned for cooperative engagement with side surface portions **820** and **822** of surface portion **808** of segment body **806**. In such case, surface portions **808** and **830** can, in some cases, be in substantially continuously contact with one another between outer edges **824** and **826**.

Additionally, retread band **804** can, optionally, include one or more reinforcing layers or plies that are at least partially embedded within at least one layer of elastomeric material from which retread band **804** is formed. Any such one or more reinforcing layers or plies can be included in either or both of base portions **832** and rib portions **834,** such as are represented in FIGS. 21 and 22 by dashed lines **844** and **846**.

As used herein, terms such as "fiber," "filament," and the like, are used interchangeably in reference to individual elements of material having a small cross-sectional dimension and an indefinite elongated length.

As used herein, terms such as "yarn", "tow" and the like, are used in reference to a plurality of filaments that are laid, twisted and/or otherwise bundled together in a continuous, elongated strand of indefinite length. As one example, a yarn can include a quantity of filaments within a range of from approximately 10 filaments to approximately 500,000 filaments depending upon the type and kind of material from which the filaments are made.

As used herein, terms such as "cord" and the like, are used in reference to the product of one or more yarns that may be laid, twisted or otherwise bundled together in a continuous, elongated strand of indefinite length. In some cases, the one or more yarns may be treated with a binder, adhesive and/or matrix material.

As used herein with reference to certain features, elements, components and/or structures, numerical ordinals (e.g., first, second, third, fourth, etc.) may be used to denote different singles of a plurality or otherwise identify certain features, elements, components and/or structures, and do not imply any order or sequence unless specifically defined by the claim language. Additionally, the terms "transverse," and the like, are to be broadly interpreted. As such, the terms "transverse," and the like, can include a wide range of relative angular orientations that include, but are not limited to, an approximately perpendicular angular orientation. Also, the terms "circumferential," "circumferentially," and the like, are to be broadly interpreted and can include, but are not limited to circular shapes and/or configurations. In this regard, the terms "circumferential," "circumferentially," and the like, can be synonymous with terms such as "peripheral," "peripherally," and the like.

It will be recognized that numerous different features and/or components are presented in the embodiments shown and described herein, and that no one embodiment may be specifically shown and described as including all such features and components. As such, it is to be understood that the subject matter of the present disclosure is intended to encompass any and all combinations of the different features and components that are shown and described herein, and, without limitation, that any suitable arrangement of features and components, in any combination, can be used. Thus it is to be distinctly understood that claims directed to any such combination of features and/or components, whether or not specifically embodied herein, are intended to find support in the present disclosure.

## Claims

1. A retread band (126; 300; 400, 400'; 604; 704; 804) elastically extensible about an associated plurality of retread rim segments (124; 602; 702; 802), said retread band comprising:

   a first layer of elastomeric material (310; 418) extending annularly about a longitudinal axis (AX);
   a first annular edge (302; 402; 620; 724; 824);
   a second annular edge (304; 404; 622; 726; 826) spaced longitudinally from said first annular edge;
   an inner surface (154; 306; 406; 626; 730; 830) facing radially inward and dimensioned to abuttingly engage the associated plurality of retread rim segments;
   an outer surface (156; 308; 408; 624; 728; 828) facing radially outward and dimensioned to abuttingly engage associated beads of an associated tire (TIRE) to be retreaded; and
   at least one reinforcing ply (318, 318A, 318B; 426, 426A, 426B, 428, 428A, 428B; 636, 638; 744, 746; 844, 846) embedded within said first layer of elastomeric material (310, 418), said at least one reinforcing ply being **characterised by** including a plurality of reinforcing filaments (320A, 320B) extending annularly about said longitudinal axis (AX) within said first layer of elastomeric material.

2. A retread band according to claim 1, wherein said at least one reinforcing ply (318, 318A, 318B; 426, 426A, 426B, 428, 428A, 428B; 636, 638; 744, 746; 844, 846) extends longitudinally between said first and second annular edges (302, 304; 402, 404; 620, 622; 724, 726; 824, 826) such that at least a portion of said plurality of reinforcing filaments (320A, 320B) of said at least one reinforcing ply is exposed along said first and second annular edges.

3. A retread band according to claim 1 or claim 2, wherein said retread band (126; 300; 400, 400'; 604; 704; 804) includes a midplane (MP) disposed between said first and second annular edges (302, 304; 402, 404; 620, 622; 724, 726; 824, 826) and oriented transverse to said longitudinal axis (AX), and said at least one reinforcing ply (318, 318A, 318B; 426, 426A, 426B, 428, 428A, 428B; 636, 638; 744, 746; 844, 846) includes a first reinforcing ply with a first plurality of reinforcing filaments extending around said longitudinal axis and oriented at a first bias angle relative to said midplane with said first bias angle being within a range of from approximately zero (0) degrees to approximately ten (10) degrees.

4. A retread band according to any one of claims 1-2, wherein said retread band (126; 300; 400, 400'; 604; 704; 804) includes a midplane (MP) disposed between said first and second annular edges (302, 304; 402, 404; 620, 622; 724, 726; 824, 826) and oriented transverse to said longitudinal axis (AX), and said at least one reinforcing ply (318, 318A, 318B; 426, 426A, 426B, 428, 428A, 428B; 636, 638; 744, 746; 844, 846) includes a first reinforcing ply with a first plurality of reinforcing filaments extending around said longitudinal axis (AX) and oriented at a first bias angle relative to said midplane with said first bias angle being within a range of from approximately zero (0) degrees to approximately thirty (30) degrees.

5. A retread band according to claim 4, wherein said first bias angle is within a range of from approximately ten (10) degrees to approximately twenty five (25) degrees.

6. A retread band according to claim 4, wherein said at least one reinforcing ply (318, 318A, 318B; 426, 426A, 426B, 428, 428A, 428B; 636, 638; 744, 746; 844, 846) includes a second reinforcing ply disposed radially outward of said first reinforcing ply, said second reinforcing ply including a second plurality of reinforcing filaments extending around said longitudinal axis (AX) and oriented at a second bias angle relative to said midplane with said second bias angle being within a range of from approximately zero (0) degrees to approximately thirty (30) degrees.

7. A retread band according to claim 6, wherein said second bias angle is within a range of from approximately ten (10) degrees to approximately twenty five (25) degrees.

8. A retread band according to either one of claims 6 and 7, wherein said first bias angle and said second bias angle are approximately equal in magnitude and oriented in opposing directions relative to one another.

9. A retread band according to any one of claims 1-8, wherein said elastomeric material of said first layer (310; 418) includes a first elastomeric material having a first abrasion-resistance property.

10. A retread band according to claim 9 further comprising a second layer of material (134; 312; 420) at least partially formed from a second elastomeric material having a second abrasion-resistance property that is greater than said first abrasion-resistance property of said first elastomeric material, said second elastomeric material at least partially defining said inner surface of said retread band.

11. A retread band according to claim 9 or claim 10 further comprising a third layer of material (422) at least partially formed from a third elastomeric material having a third abrasion-resistance property that is greater than at least said first abrasion-resistance property of said first elastomeric material, said third elastomeric material at least partially defining said outer surface of said retread band (400, 400').

12. A retread band according to any one of claims 1-11, wherein said retread band (126; 300; 400, 400'; 604; 704; 804) includes a release layer (316; 424) disposed along said outer surface (156; 308; 408; 624; 728; 828).

13. A retread band according to any one of claims 1-12, wherein said retread band (126; 300; 400, 400'; 604; 704; 804) has a cross-sectional shape with a base portion (410; 628; 732; 832) and at least one rib portion (412, 412'; 630; 734; 834 projecting radially inward from said inner surface (154; 306; 406; 626; 730; 830).

14. A method of manufacturing a retread rim assembly, said method comprising:

   providing a plurality of rim segments (124; 602; 702; 802) that include a segment body (128; 606; 706; 806) extending radially between an inner end (130) and an outer periphery (132) disposed radially outward of said inner end, said segment body including a first end surface (134) and a second end surface (136) oriented at an acute angle relative to said first end surface, and said segment body including a first edge wall (138) disposed along said outer periphery, a second edge wall (140) spaced axially from said first edge wall along said outer periphery and a base surface (146) extending axially between said first and second edge walls with said base surface and said first and second edge walls extending arcuately between said first and second end surfaces;

providing a retread band (126; 300; 400, 400'; 604; 704; 804) according to any one of claims 1-13;

positioning said plurality of rim segments (124; 602; 702; 802) in a generally circular arrangement about a central axis with said retread band (126; 300; 400, 400'; 604; 704; 804) disposed around said plurality of rim segments such that said inner surface (154; 306; 406; 626; 730; 830) of said retread band is disposed in abutting engagement with said base surfaces (146) of said plurality of rim segments and such that said retread band is circumferentially tensioned to bias said plurality of rim segments radially inward such that adjacent rim segments are disposed in abutting engagement with one another along said first and second end surfaces (134, 136) thereof.

15. A retread rim assembly (122; 600; 700; 800) dimensioned to receive an associated tire having associated tire beads, said retread rim assembly comprising:

a plurality of rim segments (124; 602; 702; 802) disposed in a generally circular arrangement about a central axis, said plurality of rim segments including a segment body (128; 606; 706; 806) extending radially between an inner end (130) and an outer periphery (132) disposed radially outward of said inner end, said segment body including a first end surface (134) and a second end surface (134) oriented at an acute angle relative to said first end surface, and said segment body including a first edge wall (138) disposed along said outer periphery, a second edge wall (140) spaced axially from said first edge wall along said outer periphery and a base surface (146) extending axially between said first and second edge walls with said base surface and said first and second edge walls extending arcuately between said first and second end surfaces; and,

a retread band (126; 300; 400, 400'; 604; 704; 804) according to any one of claims 1-13 disposed around said plurality of rim segments (124; 602; 702; 802) such that said inner surface (154; 306; 406; 626; 730; 830) of said retread band is disposed in abutting engagement with said base surfaces (146) of said plurality of rim segments, and said retread band is circumferentially tensioned to bias said plurality of rim segments radially inward such that adjacent rim segments are disposed in abutting engagement with one another along said first and second end surfaces.

**Patentansprüche**

1. Runderneuerungsband (126; 300; 400, 400'; 604; 704; 804), das elastisch um eine zugeordnete Vielzahl von Runderneuerungsfelgensegmenten (124; 602; 702; 802) dehnbar ist, wobei das Runderneuerungsband umfasst:

eine erste Schicht aus elastomerem Material (310; 418), die sich ringförmig um eine Längsachse (AX) erstreckt;
eine erste ringförmige Kante (302; 402; 620; 724; 824);
eine zweite ringförmige Kante (304; 404; 622; 726; 826), die längs von der ersten ringförmigen Kante beabstandet ist;
eine Innenoberfläche (154; 306; 406; 626; 730; 830), die radial nach innen gewandt ist und dazu bemessen ist, anliegend in die zugeordnete Vielzahl von Runderneuerungsfelgensegmenten einzugreifen;
eine Außenoberfläche (156; 308; 408; 624; 728; 828), die radial nach außen gewandt ist und dazu bemessen ist, anliegend in die Reifenwülste eines zugeordneten Reifens (REIFEN), der zu runderneuern ist, einzugreifen; und
mindestens eine verstärkende Lage (318, 318A, 318B; 426, 426A, 426B, 428, 428A, 428B; 636, 638; 744, 746; 844, 846), die innerhalb der ersten Schicht aus elastomerem Material (310, 418) eingebettet ist, wobei mindestens eine verstärkende Lage **dadurch gekennzeichnet ist, dass** sie eine Vielzahl von verstärkenden Fasern (320A, 320B) einschließt, die sich ringförmig um die Längsachse (AX) innerhalb der ersten Schicht aus elastomerem Material erstrecken.

2. Runderneuerungsband nach Anspruch 1, wobei sich die mindestens eine verstärkende Lage (318, 318A, 318B; 426, 426A, 426B, 428, 428A, 428B; 636, 638; 744, 746; 844, 846) längs zwischen der ersten und der zweiten ringförmigen Kante (302, 304; 402, 404; 620, 622; 724, 726; 824, 826) erstreckt, sodass mindestens ein Teil der Vielzahl von verstärkenden Fasern (320A, 320B) der mindestens einen verstärkenden Lage entlang der ersten und der zweiten ringförmigen Kante freiliegt.

3. Runderneuerungsband nach Anspruch 1 oder Anspruch 2, wobei das Runderneuerungsband (126; 300; 400, 400'; 604; 704; 804) eine Mittelebene (MP) einschließt, die zwischen der ersten und der zweiten ringförmigen Kante (302, 304; 402, 404; 620, 622; 724, 726; 824, 826) angeordnet ist und quer zu der Längsachse (AX) ausgerichtet ist, und die mindestens eine verstärkende Lage (318, 318A, 318B; 426, 426A, 426B, 428, 428A, 428B; 636, 638; 744, 746;

844, 846) eine erste verstärkende Lage mit einer ersten Vielzahl von verstärkenden Fasern einschließt, die sich um die Längsachse erstreckt und in einem ersten Schneidewinkel in Bezug auf die Mittelebene ausgerichtet ist, wobei der erste Schneidewinkel innerhalb eines Bereichs von ungefähr Null (0) Grad bis ungefähr zehn (10) Grad liegt.

4. Runderneuerungsband nach einem der Ansprüche 1 bis 2, wobei das Runderneuerungsband (126; 300; 400, 400'; 604; 704; 804) eine Mittelebene (MP) einschließt, die zwischen der ersten und der zweiten ringförmigen Kante (302, 304; 402, 404; 620, 622; 724, 726; 824, 826) angeordnet ist und quer zu der Längsachse (AX) ausgerichtet ist, und die mindestens eine verstärkende Lage (318, 318A, 318B; 426, 426A, 426B, 428, 428A, 428B; 636, 638; 744, 746; 844, 846) eine erste verstärkende Lage mit einer ersten Vielzahl von verstärkenden Fasern einschließt, die sich um die Längsachse (AX) erstreckt und in einem ersten Schneidewinkel in Bezug auf die Mittelebene ausgerichtet ist, wobei der erste Schneidewinkel innerhalb eines Bereichs von ungefähr Null (0) Grad bis ungefähr dreißig (30) Grad liegt.

5. Runderneuerungsband nach Anspruch 4, wobei der erste Schneidewinkel innerhalb eines Bereichs von ungefähr zehn (10) Grad bis etwa fünfundzwanzig (25) Grad liegt.

6. Runderneuerungsband nach Anspruch 4, wobei die mindestens eine verstärkende Lage (318, 318A, 318B; 426, 426A, 426B, 428, 428A, 428B; 636, 638; 744, 746; 844, 846) eine zweite verstärkende Lage einschließt, die bezüglich der ersten verstärkenden Lage radial nach außen angeordnet ist, wobei die zweite verstärkende Lage eine zweite Vielzahl von verstärkenden Fasern einschließt, die sich um die Längsachse (AX) erstreckt und in einem zweiten Schneidewinkel in Bezug auf die Mittelebene ausgerichtet ist, wobei der zweite Schneidewinkel innerhalb eines Bereichs von ungefähr Null (0) Grad bis etwa dreißig (30) Grad liegt.

7. Runderneuerungsband nach Anspruch 6, wobei der zweite Schneidewinkel innerhalb eines Bereichs von ungefähr zehn (10) Grad bis etwa fünfundzwanzig (25) Grad liegt.

8. Runderneuerungsband nach einem der Ansprüche 6 oder 7, wobei der erste Schneidewinkel und der zweite Schneidewinkel ungefähr gleich groß sind und in entgegengesetzten Richtungen in Bezug aufeinander ausgerichtet sind.

9. Runderneuerungsband nach einem der Ansprüche 1 bis 8, wobei das elastomere Material der ersten Schicht (310; 418) ein erstes elastomeres Material einschließt, das eine erste Abriebfestigkeitseigenschaft aufweist.

10. Runderneuerungsband nach Anspruch 9, ferner umfassend eine zweite Schicht Material (134; 312; 420), die mindestens teilweise aus einem zweiten elastomeren Material gebildet ist, das eine zweite Abriebfestigkeitseigenschaft aufweist, die stärker als die erste Abriebfestigkeitseigenschaft des ersten elastomeren Materials ist, wobei das zweite elastomere Material mindestens teilweise die Innenoberfläche des Runderneuerungsbands definiert.

11. Runderneuerungsband nach Anspruch 9 oder Anspruch 10, ferner umfassend eine dritte Schicht Material (422), die mindestens teilweise aus einem dritten elastomeren Material gebildet ist, das eine dritte Abriebfestigkeitseigenschaft aufweist, die stärker als mindestens die erste Abriebfestigkeitseigenschaft des ersten elastomeren Materials ist, wobei das dritte elastomere Material mindestens teilweise die Außenoberfläche des Runderneuerungsbands (400, 400') definiert.

12. Runderneuerungsband nach einem der Ansprüche 1 bis 11, wobei das Runderneuerungsband (126; 300; 400, 400'; 604; 704; 804) eine Freigabeschicht (316; 424) einschließt, die entlang der Außenoberfläche (156; 308; 408; 624; 728; 828) angeordnet ist.

13. Runderneuerungsband nach einem der Ansprüche 1 bis 12, wobei das Runderneuerungsband (126; 300; 400, 400'; 604; 704; 804) eine Querschnittsform mit einem Basisabschnitt (410; 628; 732; 832) und mindestens einem Rippenabschnitt (412, 412'; 630; 734; 834) aufweist, der von der Innenoberfläche (154; 306; 406; 626; 730; 830) radial nach innen vorsteht.

14. Verfahren zum Herstellen einer Runderneuerungsfelgenanordnung, wobei das Verfahren umfasst:

Bereitstellen einer Vielzahl von Felgensegmenten (124; 602; 702; 802), die einen Segmentkörper (128; 606; 706; 806) einschließen, der sich radial zwischen einem Innenende (130) und einem Außenumfang (132) erstreckt, der bezüglich auf das Innenende radial nach außen angeordnet ist, wobei der Segmentkörper eine erste Endoberfläche (134) und eine zweite Endoberfläche (136) einschließt, die in Bezug auf die erste Endoberfläche in einem spitzen Winkel ausgerichtet ist, und wobei der Segmentkörper eine erste Kantenwand (138), die entlang des Außenumfangs angeordnet ist, eine zweite Kantenwand (140), die axial von der ersten Kantenwand entlang des Außenumfangs beabstandet ist, und eine Basisoberfläche (146) einschließt, die sich axial zwischen der ersten und der zweiten Kantenwand erstreckt, wobei sich die Basisoberfläche und die erste und die zweite Kantenwand bogenförmig zwischen der ersten und der zweiten Endoberfläche erstrecken; Bereitstellen eines Runderneuerungsbands (126; 300; 400, 400'; 604; 704; 804) nach einem der Ansprüche 1 bis 13;

Positionieren der Vielzahl von Felgensegmenten (124; 602; 702; 802) in einer im Allgemeinen kreisförmigen Anordnung um eine Mittelachse, wobei das Runderneuerungsband (126; 300; 400, 400'; 604; 704; 804) um die Vielzahl von Felgensegmenten angeordnet ist, sodass die Innenoberfläche (154; 306; 406; 626; 730; 830) des Runderneuerungsbands in anliegendem Eingriff mit der Basisoberfläche (146) der Vielzahl von Felgensegmenten angeordnet ist und sodass das Runderneuerungsband umfangsmäßig gespannt ist, um die Vielzahl von Felgensegmenten radial nach innen vorzuspannen, sodass benachbarte Felgensegmente in anliegendem Eingriff miteinander entlang der ersten und der zweiten Endoberfläche (134, 136) davon angeordnet sind.

15. Runderneuerungsfelgenanordnung (122; 600; 700; 800), die dazu bemessen ist, einen zugeordneten Reifen aufzunehmen, der zugeordnete Reifenwülste aufweist, wobei die Runderneuerungsfelgenanordnung umfasst:

eine Vielzahl von Felgensegmenten (124; 602; 702; 802), die in einer im Allgemeinen kreisförmigen Anordnung um eine Mittelachse angeordnet sind, wobei die Vielzahl von Felgensegmenten einen Segmentkörper (128; 606; 706; 806) einschließen, der sich radial zwischen einem Innenende (130) und einem Außenumfang (132) erstreckt, der bezüglich auf das Innenende radial nach außen angeordnet ist, wobei der Segmentkörper eine erste Endoberfläche (134) und eine zweite Endoberfläche (134) einschließt, die in Bezug auf die erste Endoberfläche in einem spitzen Winkel ausgerichtet ist, und wobei der Segmentkörper eine erste Kantenwand (138), die entlang des Außenumfangs angeordnet ist, eine zweite Kantenwand (140), die axial von der ersten Kantenwand entlang des Außenumfangs beabstandet ist, und eine Basisoberfläche (146) einschließt, die sich axial zwischen der ersten und der zweiten Kantenwand erstreckt, wobei sich die Basisoberfläche und die erste und die zweite Kantenwand bogenförmig zwischen der ersten und der zweiten Endoberfläche erstrecken; und ein Runderneuerungsband (126; 300; 400, 400'; 604; 704; 804) nach einem der Ansprüche 1 bis 13, das um die Vielzahl von Felgensegmenten (124; 602; 702; 802) angeordnet ist, sodass die Innenoberfläche (154; 306; 406; 626; 730; 830) des Runderneuerungsbands in anliegendem Eingriff mit den Basisoberflächen (146) der Vielzahl von Felgensegmenten angeordnet ist und das Runderneuerungsband umfangsmäßig gespannt ist, um die Vielzahl von Felgensegmenten radial nach innen vorzuspannen, sodass benachbarte Felgensegmente in anliegendem Eingriff miteinander entlang der ersten und der zweiten Endoberfläche davon angeordnet sind.

**Revendications**

1. Bande de rechapage (126 ; 300 ; 400, 400' ; 604 ; 704 ; 804) élastiquement extensible autour d'une pluralité associée de segments de jante de rechapage (124 ; 602 ; 702 ; 802), ladite bande de rechapage comprenant :

une première couche de matériau élastomère (310 ; 418) s'étendant annulairement autour d'un axe longitudinal (AX) ; un premier bord annulaire (302 ; 402 ; 620 ; 724 ; 824) ; un deuxième bord annulaire (304 ; 404 ; 622 ; 726 ; 826) espacé longitudinalement dudit premier bord annulaire ; une surface interne (154 ; 306 ; 406 ; 626 ; 730 ; 830) faisant face radialement vers l'intérieur et dimensionnée pour venir en prise en butée contre la pluralité associée de segments de jante de rechapage ; une surface externe (156 ; 308 ; 408 ; 624 ; 728 ; 828) faisant face radialement vers l'extérieur et dimensionnée pour venir en prise en butée contre des talons associés d'un pneu associé (TIRE) à rechaper ; et au moins une épaisseur de renfort (318, 318A, 318B ; 426, 426A, 426B, 428, 428A, 428B ; 636, 638 ; 744, 746 ; 844, 846) intégrée dans ladite première couche de matériau élastomère (310, 418), ladite au moins une épaisseur de renfort étant **caractérisée en ce qu'**elle inclut une pluralité de filaments de renfort (320A, 320B) s'étendant annulairement autour dudit axe longitudinal (AX) au sein de ladite première couche de matériau élastomère.

2. Bande de rechapage selon la revendication 1, dans laquelle ladite au moins une épaisseur de renfort (318, 318A, 318B ; 426, 426A, 426B, 428, 428A, 428B ; 636, 638 ; 744, 746 ; 844, 846) s'étend longitudinalement entre lesdits premier et deuxième bords annulaires (302, 304 ; 402, 404 ; 620, 622 ; 724, 726 ; 824, 826) de telle sorte qu'au moins une partie de ladite pluralité de filaments de renfort (320A, 320B) de ladite au moins une épaisseur de renfort est exposée le long desdits premier et deuxième bords annulaires.

3. Bande de rechapage selon la revendication 1 ou la revendication 2, dans laquelle ladite bande de rechapage (126 ; 300 ; 400, 400' ; 604 ; 704 ; 804) inclut un plan médian (MP) disposé entre lesdits premier et deuxième bords annulaires (302, 304 ; 402, 404 ; 620, 622 ; 724, 726 ; 824, 826) et orienté transversal audit axe longitudinal (AX), et ladite au moins une épaisseur de renfort (318, 318A, 318B ; 426, 426A, 426B, 428, 428A, 428B ; 636, 638 ; 744, 746 ; 844, 846) inclut une première épaisseur de renfort avec une première pluralité de filaments de renfort s'étendant autour dudit axe longitudinal et orientée selon un premier angle de sollicitation par rapport audit plan médian avec ledit premier angle de sollicitation étant dans une plage allant d'approximativement zéro (0) degré à approximativement dix (10) degrés.

4. Bande de rechapage selon l'une quelconque des revendications 1 ou 2, dans laquelle ladite bande de rechapage (126 ; 300 ; 400, 400' ; 604 ; 704 ; 804) inclut un plan médian (MP) disposé entre lesdits premier et deuxième bords annulaires (302, 304 ; 402, 404 ; 620, 622 ; 724, 726 ; 824, 826) et orienté transversal audit axe longitudinal (AX), et ladite au moins une épaisseur de renfort (318, 318A, 318B ; 426, 426A, 426B, 428, 428A, 428B ; 636, 638 ; 744, 746 ; 844, 846) inclut une première épaisseur de renfort avec une première pluralité de filaments de renfort s'étendant autour dudit axe longitudinal (AX) et orientée selon un premier angle de sollicitation par rapport audit plan médian avec ledit premier angle de sollicitation étant dans une plage allant d'approximativement zéro (0) degré à approximativement trente (30) degrés.

5. Bande de rechapage selon la revendication 4, dans laquelle ledit premier angle de sollicitation se situe dans une plage allant d'approximativement dix (10) degrés à approximativement vingt-cinq (25) degrés.

6. Bande de rechapage selon la revendication 4, dans laquelle ladite au moins une épaisseur de renfort (318, 318A, 318B ; 426, 426A, 426B, 428, 428A, 428B ; 636, 638 ; 744, 746 ; 844, 846) inclut une deuxième épaisseur de renfort disposée radialement vers l'extérieur de ladite première épaisseur de renfort, ladite deuxième épaisseur de renfort incluant une deuxième pluralité de filaments de renfort s'étendant autour dudit axe longitudinal (AX) et orientée selon un deuxième angle de sollicitation par rapport audit plan médian avec ledit deuxième angle de sollicitation dans une plage allant d'approximativement zéro (0) degré à approximativement trente (30) degrés.

7. Bande de rechapage selon la revendication 6, dans laquelle ledit deuxième angle de sollicitation se situe dans une plage allant d'approximativement dix (10) degrés à approximativement vingt-cinq (25) degrés.

8. Bande de rechapage selon l'une quelconque des revendications 6 et 7, dans laquelle ledit premier angle de sollicitation et ledit deuxième angle de sollicitation sont approximativement égaux en ordre de grandeur et orientés dans des directions opposées l'un par rapport à l'autre.

9. Bande de rechapage selon l'une quelconque des revendications 1 à 8, dans laquelle ledit matériau élastomère de ladite première couche (310 ; 418) inclut un premier matériau élastomère ayant une première propriété de résistance à l'abrasion.

10. Bande de rechapage selon la revendication 9 comprenant en outre une deuxième couche de matériau (134 ; 312 ; 420) formée au moins partiellement d'un deuxième matériau élastomère ayant une deuxième propriété de résistance à l'abrasion qui est supérieure à ladite première propriété de résistance à l'abrasion dudit premier matériau élastomère, ledit deuxième matériau élastomère définissant au moins partiellement ladite surface interne de ladite bande de rechapage.

11. Bande de rechapage selon la revendication 9 ou la revendication 10 comprenant en outre une troisième couche de matériau (422) formée au moins partiellement à partir d'un troisième matériau élastomère ayant une troisième propriété de résistance à l'abrasion qui est supérieure au moins à ladite première propriété de résistance à l'abrasion dudit premier matériau élastomère, ledit troisième matériau élastomère définissant au moins partiellement ladite surface externe de ladite bande de rechapage (400, 400').

12. Bande de rechapage selon l'une quelconque des revendications 1 à 11, dans laquelle ladite bande de rechapage (126 ; 300 ; 400, 400' ; 604 ; 704 ; 804) inclut une couche anti-adhésive (316 ; 424) disposée le long de ladite surface externe (156 ; 308 ; 408 ; 624 ; 728 ; 828).

13. Bande de rechapage selon l'une quelconque des revendications 1 à 12, dans laquelle ladite bande de rechapage (126 ; 300 ; 400, 400' ; 604 ; 704 ; 804) a une forme en coupe transversale avec une partie de base (410 ; 628 ; 732 ; 832) et au moins une partie de nervure (412, 412' ; 630 ; 734 ; 834 faisant saillie radialement vers l'intérieur à partir de ladite surface interne (154 ; 306 ; 406 ; 626 ; 730 ; 830).

**14.** Procédé de fabrication d'un ensemble jante de rechapage, ledit procédé comprenant :

la fourniture d'une pluralité de segments de jante (124 ; 602 ; 702 ; 802) qui incluent un corps de segment (128 ; 606 ; 706 ; 806) s'étendant radialement entre une extrémité interne (130) et une périphérie externe (132) disposée radialement vers l'extérieur de ladite extrémité interne, ledit corps de segment incluant une première surface d'extrémité (134) et une deuxième surface d'extrémité (136) orientée selon un angle aigu par rapport à ladite première surface d'extrémité, et ledit corps de segment incluant une première paroi de bord (138) disposée le long de ladite périphérie externe, une deuxième paroi de bord (140) espacée axialement de ladite première paroi de bord le long de ladite périphérie externe et une surface de base (146) s'étendant axialement entre lesdites première et deuxième parois de bord avec ladite surface de base et lesdites première et deuxième parois de bord s'étendant de façon arquée entre lesdites première et deuxième surfaces d'extrémité ;
la fourniture d'une bande de rechapage (126 ; 300 ; 400, 400' ; 604 ; 704 ; 804) selon l'une quelconque des revendications 1 à 13 ;
le positionnement de ladite pluralité de segments de jante (124 ; 602 ; 702 ; 802) dans un agencement généralement circulaire autour d'un axe central avec ladite bande de rechapage (126 ; 300 ; 400, 400' ; 604 ; 704 ; 804) disposée autour de ladite pluralité de segments de jante de telle sorte que ladite surface interne (154 ; 306 ; 406 ; 626 ; 730 ; 830) de ladite bande de rechapage est disposée en mise en prise en butée avec lesdites surfaces de base (146) de ladite pluralité de segments de jante et de telle sorte que ladite bande de rechapage est tendue circonférentiellement pour solliciter ladite pluralité de segments de jante radialement vers l'intérieur de telle sorte que des segments de jante adjacents sont disposés en mise en prise en butée les uns avec les autres le long desdites première et deuxième surfaces d'extrémité (134, 136) de ceux-ci.

**15.** Ensemble jante de rechapage (122 ; 600 ; 700 ; 800) dimensionné pour recevoir un pneu associé ayant des talons de pneu associés, ledit ensemble jante de rechapage comprenant :

une pluralité de segments de jante (124 ; 602 ; 702 ; 802) disposés dans un agencement généralement circulaire autour d'un axe central, ladite pluralité de segments de jante incluant un corps de segment (128 ; 606 ; 706 ; 806) s'étendant radialement entre une extrémité interne (130) et une périphérie externe (132) disposée radialement vers l'extérieur de ladite extrémité interne, ledit corps de segment incluant une première surface d'extrémité (134) et une deuxième surface d'extrémité (134) orientée selon un angle aigu par rapport à ladite première surface d'extrémité, et ledit corps de segment incluant une première paroi de bord (138) disposée le long de ladite périphérie externe, une deuxième paroi de bord (140) espacée axialement de ladite première paroi de bord le long de ladite périphérie externe et une surface de base (146) s'étendant axialement entre lesdites première et deuxième parois de bord avec ladite surface de base et lesdites première et deuxième parois de bord s'étendant de façon arquée entre lesdites première et deuxième surfaces d'extrémité ; et,
une bande de rechapage (126 ; 300 ; 400, 400' ; 604 ; 704 ; 804) selon l'une quelconque des revendications 1 à 13 disposée autour de ladite pluralité de segments de jante (124 ; 602 ; 702 ; 802) de telle sorte que ladite surface interne (154 ; 306 ; 406 ; 626 ; 730 ; 830) de ladite bande de rechapage est disposée en mise en prise en butée avec lesdites surfaces de base (146) de ladite pluralité de segments de jante, et ladite bande de rechapage est circonférentiellement tendue pour solliciter ladite pluralité de segments de jante radialement vers l'intérieur de telle sorte que des segments de jante adjacents sont disposés en mise en prise en butée les uns avec les autres le long desdites première et deuxième surfaces d'extrémité.

FIG. 1

FIG. 2

TIRE

122

124

138

132

156

136

124

154

126

146 134

FIG. 3

FIG. 4

24

TIRE

200

132

164   180

148

122

128   158

124

130

118

120

AX

130

128   160

146   162

124

138   140

126   148   132

164   180

200

FIG. 5

FIG. 6

FIG. 7

FIG. 8

FIG. 9

FIG. 10

# FIG. 11

FIG. 12

412

410

14

400

402

404

MP

AX

406

408

# FIG. 13

FIG. 14

EP 3 416 818 B1

FIG. 15

EP 3 416 818 B1

TIRE

604

600

606

602

606

602

608

614

612

610

FIG. 16

FIG. 17

FIG. 18

FIG. 19

TIRE

MP

FIG. 20

TIRE

804

800

806

802

806

814

808

814

812

810

FIG. 21

FIG. 22

EP 3 416 818 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3578045 A